(19) Europäisches Patentamt
European Patent Office
Office européen des brevets

(11) EP 4 757 173 A1

(12) **EUROPEAN PATENT APPLICATION**
published in accordance with Art. 153(4) EPC

(43) Date of publication:
**10.06.2026 Bulletin 2026/24**

(21) Application number: **24848924.7**

(22) Date of filing: **17.07.2024**

(51) International Patent Classification (IPC):
***H02S 50/10*** *(2014.01)* ***G01N 17/00*** *(2006.01)*
***G01N 21/65*** *(2006.01)* ***H02S 50/15*** *(2014.01)*

(52) Cooperative Patent Classification (CPC):
**G01N 17/00; G01N 21/65; H02S 50/10; H02S 50/15;** Y02E 10/50

(86) International application number:
**PCT/JP2024/025655**

(87) International publication number:
**WO 2025/028269 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023124710**

(71) Applicant: **Kyocera Corporation**
**Kyoto-shi, Kyoto 612-8501 (JP)**

(72) Inventors:
- **NIIRA Koichiro**
  **Kyoto-shi, Kyoto 612-8501 (JP)**
- **YOSHIDA Atsushi**
  **Kyoto-shi, Kyoto 612-8501 (JP)**
- **YAMAZAKI Hiroki**
  **Kyoto-shi, Kyoto 612-8501 (JP)**
- **HEITO Shunsuke**
  **Kyoto-shi, Kyoto 612-8501 (JP)**
- **YAMASHITA Teppei**
  **Kyoto-shi, Kyoto 612-8501 (JP)**

(74) Representative: **TBK**
**Bavariaring 4-6**
**80336 München (DE)**

(54) **ELECTRONIC DEVICE, METHOD FOR CONTROLLING ELECTRONIC DEVICE, AND PROGRAM**

(57) An electronic device generates, based on first information indicating an acetic acid concentration in an encapsulant of a photovoltaic module at a predetermined point in time, second information indicating an acetic acid concentration in the encapsulant at an end of a period during which the photovoltaic module is capable of outputting a predetermined electric power, and third information related to calculation of a change in acetic acid concentration in the encapsulant over time within a use environment of the photovoltaic module, fourth information regarding a remaining period during which the photovoltaic module is assumed to be capable of outputting the predetermined electric power within the use environment.

EP 4 757 173 A1

FIG. 4

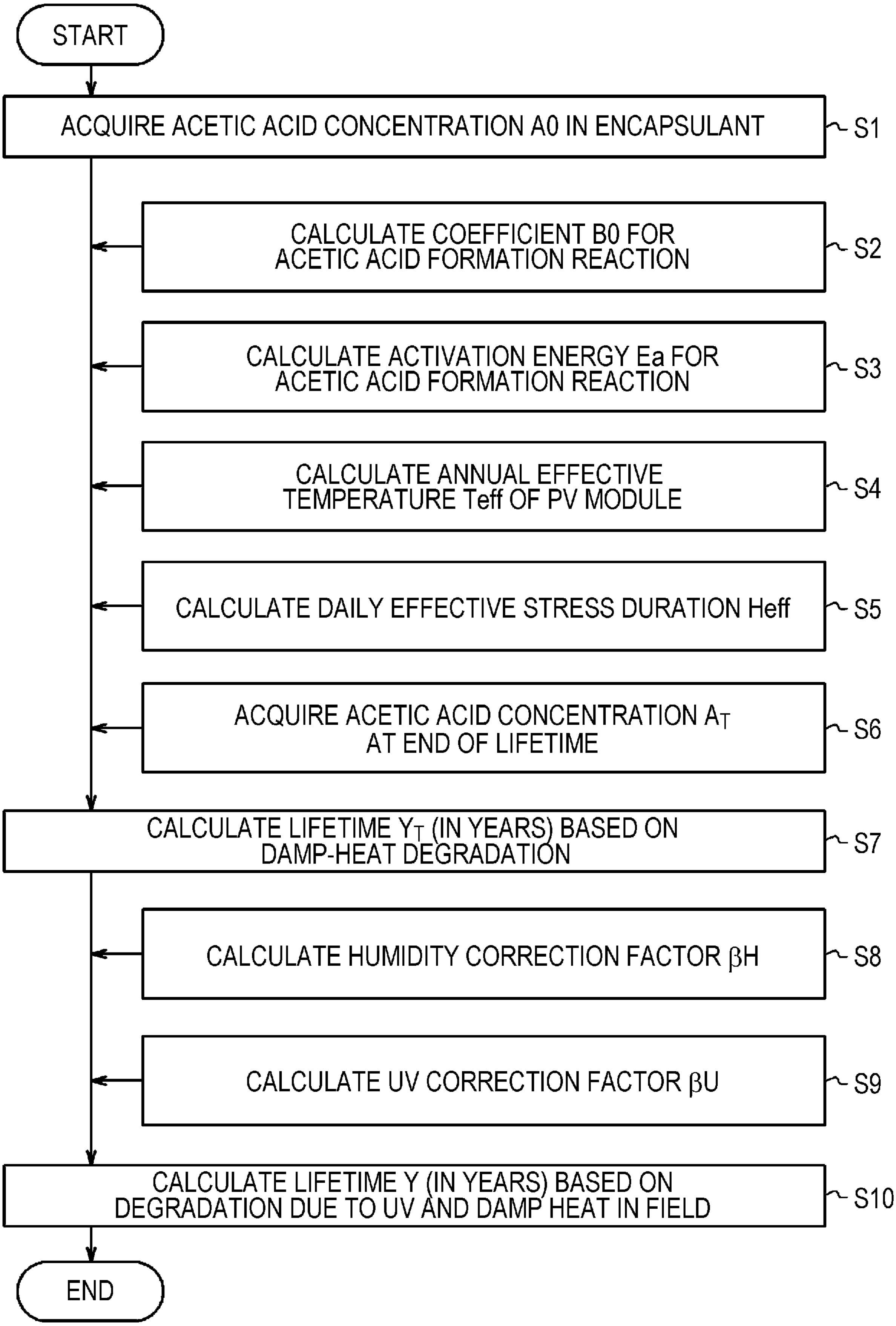
START
ACQUIRE ACETIC ACID CONCENTRATION A0 IN ENCAPSULANT
S1
CALCULATE COEFFICIENT B0 FOR ACETIC ACID FORMATION REACTION
S2
CALCULATE ACTIVATION ENERGY Ea FOR ACETIC ACID FORMATION REACTION
S3
CALCULATE ANNUAL EFFECTIVE TEMPERATURE Teff OF PV MODULE
S4
CALCULATE DAILY EFFECTIVE STRESS DURATION Heff
S5
ACQUIRE ACETIC ACID CONCENTRATION $A_T$ AT END OF LIFETIME
S6
CALCULATE LIFETIME $Y_T$ (IN YEARS) BASED ON DAMP-HEAT DEGRADATION
S7
CALCULATE HUMIDITY CORRECTION FACTOR βH
S8
CALCULATE UV CORRECTION FACTOR βU
S9
CALCULATE LIFETIME Y (IN YEARS) BASED ON DEGRADATION DUE TO UV AND DAMP HEAT IN FIELD
S10
END

## Description

CROSS-REFERENCE TO RELATED APPLICATIONS

This application claims priority to Japanese Patent Application No. 2023-124710 filed in Japan on July 31, 2023, and the entire disclosure of this earlier application is hereby incorporated by reference.

TECHNICAL FIELD

The present disclosure relates to an electronic device, an electronic device control method, and a program.

BACKGROUND OF INVENTION

In recent years, studies on the degradation of a photovoltaic module (hereinafter referred to as a "PV module" or simply a "module". Generally, also referred to as a "photovoltaic panel" or a "PV panel") have been conducted. For example, Non Patent Literature 1 discloses the degradation of a polymeric material of a PV module operating in a high temperature environment. For example, Patent Literature 1 discloses a PV module evaluation method for measuring water ingress in a preliminary stage prior to the occurrence of degradation in the PV module. For example, Patent Literature 2 discloses a management device that estimates a decrease in the output of a PV module.

Non-Patent Literature 2 and Non-Patent Literature 3 also teach that acetic acid in the encapsulant of a PV module causes corrosion degradation of the electrodes and that this acetic acid, in turn, is involved in the degradation of the PV module. Patent Literature 3 proposes a method for evaluating the lifetime of a PV module through detection of the degree of degradation of the PV module’s encapsulant through glass. Patent Literature 4 proposes a method for estimating the lifetime of a PV module based on the degree of degradation of the PV module’s encapsulant and the frequency of occurrence of a PID phenomenon (potential induced degradation) of the PV cells.

CITATION LIST

NON PATENT LITERATURE

Non Patent Literature 1: Sarah Kurtz, et al., "Evaluation of High-Temperature Exposure of Rack-Mounted Photovoltaic Modules", Conference Paper NREL/CP-520-45986, June 2009
Non Patent Literature 2: Jiang Zhu, et al., "Changes of solar cell parameters during damp-heat exposure", Prog. Photovolt: Res. Appl. 2016, 24, 1346-1358
Non Patent Literature 3: Atsushi Masuda, et al., "Degradation by acetic acid for crystalline Si photovoltaic modules", Jpn. J. Appl. Phys. 54, 04DR04, 2015

PATENT LITERATURE

Patent Literature 1: Japanese Unexamined Patent Application Publication No. 2007-165438
Patent Literature 2: Japanese Unexamined Patent Application Publication No. 2014-82309
Patent Literature 3: Japanese Unexamined Patent Application Publication No. 2017-55657
Patent Literature 4: Japanese Unexamined Patent Application Publication No. 2019-146338

SUMMARY

An electronic device according to an embodiment generates, based on

first information indicating an acetic acid concentration in an encapsulant of a photovoltaic module at a predetermined point in time,
second information indicating an acetic acid concentration in the encapsulant at an end of a period during which the photovoltaic module is capable of outputting a predetermined electric power, and
third information related to calculation of a change in acetic acid concentration in the encapsulant over time within a use environment of the photovoltaic module,

fourth information regarding a remaining period during which the photovoltaic module is assumed to be capable of outputting the predetermined electric power within the use environment.

An electronic device control method according to an embodiment includes

acquiring first information indicating an acetic acid concentration in an encapsulant of a photovoltaic module at a predetermined point in time,
acquiring second information indicating an acetic acid concentration in the encapsulant at an end of a period during which the photovoltaic module is capable of outputting a predetermined electric power,
acquiring third information related to calculation of a change in acetic acid concentration in the encapsulant over time within a use environment of the photovoltaic module, and
generating fourth information regarding a remaining period during which the photovoltaic module is assumed to be capable of outputting the predetermined electric power within the use environment, based on the first information, the second information, and the third information.

A program according to an embodiment causes an electronic device to execute:

acquiring first information indicating an acetic acid concentration in an encapsulant of a photovoltaic module at a predetermined point in time;
acquiring second information indicating an acetic acid concentration in the encapsulant at an end of a period during which the photovoltaic module is capable of outputting a predetermined electric power;
acquiring third information related to calculation of a change in acetic acid concentration in the encapsulant over time within a use environment of the photovoltaic module; and
generating fourth information regarding a remaining period during which the photovoltaic module is assumed to be capable of outputting the predetermined electric power within the use environment, based on the first information, the second information, and the third information.

BRIEF DESCRIPTION OF THE DRAWINGS

FIG. 1 is a block diagram schematically illustrating an example of the configuration of an electronic device according to an embodiment.
FIG. 2 is a diagram for describing degradation of a PV module.
FIG. 3 is a diagram for describing the structure of a typical PV module.
FIG. 4 is a diagram illustrating a logic flow of lifetime estimation according to an embodiment.
FIG. 5 is a diagram illustrating an example of a correspondence between pH and acetic acid concentration in the encapsulant of a PV module.
FIG. 6 is a diagram illustrating an example of a correspondence between Raman signal intensity ratio and acetic acid concentration in the encapsulant of the PV module.
FIG. 7 is a graph illustrating an example of Raman spectroscopy measurement performed using laser Raman analysis.
FIG. 8 is a diagram illustrating the temporal evolution of acetic acid concentration in EVA when the PV module was subjected to a high-temperature high-humidity test.
FIG. 9 is a diagram for describing an acid-catalyzed hydrolysis reaction.
FIG. 10 is a diagram illustrating an example of the temporal evolution of acetic acid concentration from a damp-heat test at different temperatures.
FIG. 11 is a diagram illustrating the results of calculation performed by an electronic device according to an embodiment, together with experimental results.
FIG. 12 is a diagram illustrating estimated values of acetic acid concentration and measurement values of the acetic acid concentration of a PV module installed in a field obtained by an electronic device according to an embodiment.
FIG. 13 is a diagram illustrating an example of the correlation between acetic acid concentration and FF characteristics.
FIG. 14 is a diagram illustrating lifetimes (in years) obtained by an electronic device according to an embodiment, together with the actual lifetimes of PV modules (in years), the PV modules being installed in the field.
FIG. 15 is a graph illustrating an example of the correspondence between Raman signal intensity ratio and acetic acid concentration when a UV test was performed.
FIG. 16 is a graph illustrating an example of the waveform of the Raman spectrum when degradation due to UV light stress of a UV absorber, UVA, occurs.

DESCRIPTION OF EMBODIMENTS

Estimation of the lifetime of a PV module based on degradation contributes to evaluation of the PV module. The present disclosure relates to an electronic device, an electronic device control method, and a program that contribute to evaluation of a PV module. According to an embodiment, an electronic device, an electronic device control method, and a program that contribute to evaluation of a PV module can be provided.

<Electronic Device>

In the following, an electronic device according to an embodiment is described with reference to the drawings.

In the present disclosure, an "electronic device" may be defined as a device that is driven by electric power. In the present disclosure, a "user" may be defined as a person (typically a human) who uses an electronic device according to an embodiment and/or a system including the electronic device. An assumed user of the electronic device according to an embodiment may be defined as, for example, a person who wants to know the estimated lifetime of a PV module that is included in a photovoltaic power generation system or the like. A person who wants to know the estimated lifetime of a PV module may be defined as, for example, a person who is considering installing or selling a photovoltaic power generation system for a household or a company. A person who wants to know the estimated lifetime of a PV module may be defined as a person who performs inspection, evaluation and related tasks on PV modules at an inspection agency or the like, for example. Persons who want to know the estimated lifetimes of PV modules may be defined as, for example, persons who perform asset value evaluation and related tasks on the PV modules for an insurance company, a financial institution, and the like. A person who wants to know the estimated lifetime of a PV module may be defined as, for example, a housing manufacturer, homeowner, or the like who performs PV module inspection, replacement, safety measures, removal, or the like. An assumed user of the electronic device according to an embodiment may be defined as any person who wants to know the estimated lifetime of the PV module. Hereinafter, a person (for example, a consumer, a vendor, an engineer, a testing technician, or the like) who operates an electronic device according to an embodiment will be simply referred to as a "user". Reasonable estimation of the lifetime of a PV module based on degradation would contribute to evaluation of the PV module. The evaluation of a PV module in this case may mean, for example, the evaluation of the remaining lifetime/residual asset value of a (used) PV module.

An electronic device according to an embodiment typically outputs information regarding the lifetime of a PV module in response to an input made through user operation. For example, a user can input various types of information regarding a PV module whose lifetime he/she wants to measure into an electronic device according to an embodiment. An electronic device according to an embodiment outputs information regarding estimation of the lifetime of a PV module in response to, for example, various types of information regarding the PV module input by a user. The information regarding estimation of the lifetime of a PV module output by the electronic device according to an embodiment may be defined as, for example, information regarding a period such as the number of years until the end of the lifetime of the PV module. The information regarding the period until the end of the lifetime of a PV module may be defined as, for example, the period during which the PV module can generate electric power without a significant reduction in its characteristics (such as Pm characteristics or FF characteristics described below). In other words, the information regarding the period until the end of the lifetime of a PV module may be defined as, for example, the period during which the PV module's characteristics decrease to a predetermined percentage relative to its initial values. The information regarding estimation of the lifetime of a PV module output in this manner can be displayed typically on a display device or the like. Thus, the user can be informed of the estimated lifetime of the PV module.

An electronic device according to an embodiment may generate information regarding the lifetime of a PV module based on predetermined information. In this case, the predetermined information may be acquired by an electronic device according to an embodiment or may be supplied to an electronic device according to an embodiment from another electronic device or the like. For example, an electronic device according to an embodiment may acquire various types of information regarding a PV module whose lifetime is desired to be measured. In this case, the electronic device according to an embodiment generates information regarding estimation of the lifetime of the PV module based on the various types of information acquired.

FIG. 1 is a functional block diagram schematically illustrating the configuration of an electronic device according to an embodiment.

An electronic device according to an embodiment can be configured as a dedicated terminal, for example. In contrast, an electronic device according to an embodiment may also consist of various devices, such as a laptop PC (personal computer), a desktop PC, a tablet terminal, a smartphone, a cell phone, or the like. A function of an electronic device according to an embodiment may be realized as part of the functions of another electronic device. A function of an electronic device according to an embodiment can also be realized by having any electronic device equipped with a computer execute an application program that performs processing performed by the electronic device according to an embodiment. An electronic device according to an embodiment may be defined as any information processing device or any device that includes any information processing device. An electronic device according to an embodiment may also be defined as at least part of any information processing device.

As illustrated in FIG. 1, an electronic device 1 according to an embodiment includes a controller 10, an input unit 20, an output unit 30, a communication unit 40, and a memory unit 50. The electronic device 1 according to an embodiment does not necessarily include one or more of the functional units illustrated in FIG. 1 or may include a functional unit other than the functional units illustrated in FIG. 1.

The controller 10 controls and manages the entire electronic device 1, including each functional unit of the electronic device 1. The controller 10 can include, for example, a CPU (central processing unit) or a DSP (digital signal processor). In an embodiment, the controller 10 may be configured as, for example, a CPU (hardware) and a program (software) executed by the CPU. The controller 10 may also include a memory unit (memory) necessary for the operation of the controller 10, as appropriate. In the electronic device 1 according to an embodiment, the controller 10 may calculate and/or process various types of information related to estimation of the lifetime of a PV module.

The electronic device 1 may include at least one processor as the controller 10 to perform control and provide processing capability to execute various functions. According to various embodiments, the at least one processor may be realized as a single IC (integrated circuit) or as multiple communicatively connected ICs and/or discrete circuits. The at least one processor can be realized based on various known techniques.

In an embodiment, the processor includes one or more circuits or units configured to perform one or more data calculation procedures or processes. For example, the processor may include one or more processors, controllers, microprocessors, microcontrollers, ASICs (application-specific integrated circuits), digital signal processors, programmable logic devices, field programmable gate arrays, or any combination of these devices or configurations, or a combination of other known devices or configurations to execute functions described below.

The input unit 20 can be any input device used by the user to perform operations. Examples of the input unit 20 include keys (physical keys) such as a keyboard, and/or a pointing device such as a mouse or trackball. In an embodiment, the input unit 20 can be any of various known input devices, and thus a more detailed description is omitted. In an embodiment, the electronic device 1 may acquire various types of information necessary to estimate the lifetime of a PV module from the input unit 20.

The output unit 30 outputs processing results and the like obtained by the electronic device 1. In an embodiment, the output unit 30 serves as, for example, a display and displays, for example, information related to estimation of the lifetime of a PV module. In addition, in an embodiment, the output unit 30 may display, for example, text or symbols, various objects, and/or various images that constitute a screen for prompting the user to input predetermined information, for example, to output the above-described information. Data necessary for the output unit 30 to perform display is supplied from the controller 10.

The output unit 30 may be any display device, such as an LCD (liquid crystal display), an OLED (organic electro-luminescence panel) display, or an in organic EL display (inorganic electro-luminescence panel). The output unit 30 may display various types of information, such as text, graphics, symbols, or graphs. The output unit 30 may display various GUI-constituting objects, such as buttons in addition to a pointer, icon images, and the like to prompt the user operating the electronic device 1 to perform operations. The output unit 30 may also include a backlight as appropriate.

The output unit 30 is not necessarily limited to a device that provides visual effects to the user. The output unit 30 may employ any configuration as long as it is capable of notifying the user of information related to estimation of the lifetime of a PV module. For example, the output unit 30 may be substituted with a speaker or other device that audibly provides information regarding estimation of the lifetime of a PV module. Furthermore, such a speaker may be provided together with the output unit 30, such as a display.

In an embodiment, the output unit 30 may be configured as a touch screen display, for example, together with the input unit 20. In this case, the touch screen display may include a display device, such as an LCD or an OLED display as the output unit 30. In this case, the touch screen display may include, as the input unit 20, a touch sensor or touch panel configured to detect whether the user has made contact and the position of the contact. Such a configuration enables the output unit 30 to display objects such as keys or icons and the input unit 20 to detect a touch operation performed by the operator on any of the objects. An example of the keys is a numeric keypad. The input unit 20 can employ various types of touch panels, such as resistive, capacitive, or optical touch panels.

The communication unit 40 can realize various functions, including wireless communication. The communication unit 40 may realize communication using various communication methods, such as LTE (Long Term Evolution), for example. The communication unit 40 may include, for example, a modem whose communication method is standardized in ITU-T (International Telecommunication Union Telecommunication Standardization Sector). The communication unit 40 may communicate wirelessly over a network, for example, via an antenna with an external device, such as an external server or a cloud server. In an embodiment, the communication unit 40 may receive various types of information from an external database, such as an external server or a cloud server. The various types of information received by the communication unit 40 in this manner may be stored in the memory unit 50. In an embodiment, the electronic device 1 may receive or acquire various types of information necessary to estimate the lifetime of a PV module through the communication unit 40.

The communication unit 40 is not limited to a functional unit that performs wireless communication. For example, the communication unit 40 may be configured as an interface for establishing a wired connection with an external device using a cable or the like.

The memory unit 50 stores information acquired from the controller 10, the communication unit 40, and the like. The memory unit 50 also stores a program and the like executed by the controller 10. In addition, the memory unit 50 also stores various types of data, such as the results of calculations performed by the controller 10, for example. Furthermore, the memory unit 50 is described below as one that can also include a work memory used when the controller 10 operates. The memory unit 50 can be composed of, for example, a semiconductor memory, a magnetic disk, or the like but is not limited thereto. The memory unit 50 can be any storage device. For example, the memory unit 50 may be an optical storage device, such as an optical disk, or a magneto-optical disk. For example, the memory unit 50 may be a storage medium such as a memory card inserted into the electronic device 1 according to the present embodiment. The memory unit 50 may also be the internal memory of the CPU used as the controller 10. In an embodiment, the electronic device 1 may store various types of information necessary to estimate the lifetime of a PV module in the memory unit 50.

In FIG. 1, the input unit 20, the output unit 30, the communication unit 40, and the memory unit 50 may each be built into or outside the electronic device 1.

In the following description, various calculations and/or processes performed by the electronic device 1 according to an embodiment may be performed by the controller 10. In the electronic device 1 according to an embodiment, information necessary for the various calculations and/or processes performed by the controller 10 may be stored in the memory unit 50, acquired from the input unit 20, or received from the communication unit 40. In the electronic device 1 according to an embodiment, the results of the various calculations and/or processed performed by the controller 10 may be stored in the memory unit 50, output from the output unit 30, or transmitted to the outside from the communication unit 40.

For example, activation energy Ea and a coefficient B0 of acetic acid formation reaction obtained through calculation may be databased in the memory unit 50, along with information regarding the manufacturer of a PV module, model number, date of manufacture, and other information regarding the PV module. A daily effective stress duration Heff obtained through calculation and an annual effective temperature Teff of the PV module for each installation configuration may be databased in the memory unit 50, along with the name of the region. In this case, the effective stress duration Heff is a daily effective stress duration that remains at a constant value throughout the year, as described later. The annual effective temperature Teff is the temperature of the PV module that remains at a constant value throughout the year, as described below. An actual daily effective stress duration varies from day to day. The actual temperature of the PV module also varies from day to day. However, the use of Heff and/or Teff can facilitate the calculation of an annual change in acetic acid concentration over time, as described below.

Next, an operation and/or processing performed by the electronic device 1 according to an embodiment will be described.

<Degradation and Lifetime of PV Module>

The electronic device 1 according to an embodiment estimates the lifetime of a PV module based on predetermined information regarding the PV module. More specifically, the electronic device 1 according to an embodiment generates information indicating the expected lifetime of a PV module based on predetermined information regarding the PV module. The lifetime of a PV module is attributed to degradation of the PV module. Thus, the degradation of a PV module will be described below.

The degradation of a PV module can be assumed based on different perspectives. For each of these perspectives, several factors are also assumed to be involved. In the present disclosure, "degradation of a PV module" refers to a phenomenon in which the electric power output of the PV module from photovoltaic power generation gradually decreases with time and eventually drops sharply. The applicant has found that ultraviolet light (hereinafter also referred to as "UV") and/or damp-heat stress is involved in the degradation of such a PV module. Thus, the electronic device 1 according to an embodiment estimates the lifetime of a PV module based on the PV module's degradation due to UV and/or damp heat.

FIG. 2 is a diagram for describing the degradation of a PV module. In FIG. 2, the horizontal axis represents time [year] and the vertical axis represents PV module output from photovoltaic generation. That is, FIG. 2 illustrates an example of the way in which the output of a typical PV module changes with time. FIG. 2 illustrates the way in which the output of a typical PV module gradually decreases with time and eventually drops sharply. As illustrated in FIG. 2, a typical PV module undergoes an initial degradation of Di% per year over M years from the start of photovoltaic generation. Thereafter, as illustrated in FIG. 2, the typical PV module undergoes a slow degradation of Da% per year with time.

Furthermore, as illustrated in FIG. 2, the typical PV module thereafter undergoes rapid degradation at a certain point in time (at the end of its lifetime) as described above. The photovoltaic output (generated electric power) of a PV module "dropping sharply" as described above corresponds to the "rapid degradation" illustrated in FIG. 2. This rapid degradation is known to be caused by acid generated in the encapsulant of the PV module due to UV and/or damp-heat stress.

In a PV module, the mode of gradual (slow) degradation with time and the mode of rapid degradation at a certain point in time are not necessarily the same degradation mode. The acid-induced degradation caused by UV and wet heat stresses that is dealt in this case is normally hardly seen as the main cause of (slow) degradation with time. Thus, (slow) degradation with time is assumed to be degradation that is primarily caused by an other mode of degradation different from the acid-induced degradation caused by UV and wet heat stresses. The rapid degradation caused by acid generated in the encapsulant described above corresponds to a degradation mode in which the output drops sharply at a certain point in time. This rapid degradation is deterioration that, at a certain point in time, overtakes the (slow) deterioration with time caused by an other degradation mode up to that point and appears rapidly.

To describe the factors of the degradation of the PV module as described above, the structure and degraded part of a PV module are described below.

<PV Module Structure>

FIG. 3 is a diagram for describing the structure of a PV module. FIG. 3 is a diagram illustrating a cross-section of the PV module. FIG. 3 schematically illustrates a cross-section of a typical PV module as an example. The PV module illustrated in FIG. 3 has a thickness in the Z-axis direction illustrated in FIG. 3. In the PV module illustrated in FIG. 3, the positive side of the Z-axis is also referred to as "front side" and the negative side of the Z-axis as "back side". In FIG. 3, the illustrations of locations unrelated to or weakly related to the degradation of the PV module, as described above, are omitted as appropriate.

As illustrated in FIG. 3, a PV module 100 includes front glass 110, a backsheet 120, and a solar battery cell 130. The front glass 110 constitutes an incident surface for light such as sunlight. The front glass 110 also functions as a surface protector. The backsheet 120 functions as a back side protector. The solar battery cell 130 is composed of a semiconductor such as silicon (Si). The solar battery cell 130 absorbs light energy and converts it into electricity.

The solar battery cell 130 is sealed between the front glass 110 and the backsheet 120 by an encapsulant 140 on the front side and an encapsulant 150 on the back side. In many PV modules, the encapsulant 140 and the encapsulant 150 are composed of copolymers of ethylene-vinyl acetate (EVA). The front glass 110 is made of, for example, a material with high light transmittance, such as clear float glass, tempered glass, or heat-reflective glass having a thickness of about 2 to 5 mm. The backsheet 120 is made of, for example, one type of resin or two or more types of resin among polypropylene and polyolefin. Furthermore, the backsheet 120 may include an aluminum (Al) sheet between the resins. Moreover, the backsheet 120 may contain glass.

As illustrated in FIG. 3, the solar battery cell 130 includes electrodes 170 on the front and back sides of a semiconductor substrate composed of silicon or the like. The electrodes 170 are formed using a metal, for example, as silver (Ag), aluminum (Al), or the like. The electrodes 170 may be formed in any number on at least one of the front side or the back side of the semiconductor substrate. As illustrated in FIG. 3, the electrodes 170 are formed on the semiconductor substrate with respective contact units 180 interposed therebetween. In many PV modules, the contact units 180 are formed by a thin glass layer. The electrodes 170 and the contact units 180 are generally formed by printing and sintering conductive paste, such as silver containing glass frit, on the semiconductor substrate. The electrodes 170 and the contact units 180 may be formed using film-forming techniques, such as sputtering, or plating. The contact units 180 may be formed of the same material as the electrodes 170. When the contact units 180 are formed of Al, the contact units 180 are composed without a glass layer. In this case, for the contact units 180, an Al-doped Si layer and an Al-Si alloy layer containing both Al and Si phases are formed instead of a glass layer.

Typical examples of the solar battery cell 130 include a BSF (back surface field) cell and a PERC (passivated emitter and rear cell) cell. A BSF cell may include, for example, at least one selected from the group consisting of a front Ag electrode, an AR film, an N-type diffusion layer, a P-type Si substrate, a P+ BSF layer, a back Al electrode, a back Ag electrode, and the like. A PERC cell may also include, for example, at least one selected from the group consisting of a front Ag electrode, an AR film, a N-type diffusion layer, a P-type Si substrate, a passivation film, a back Al electrode, a back Ag electrode, and the like. In this case, the passivation film may be an AlOx film, a film obtained by stacking an AlOx film and an SiN film, or the like.

<Degraded Part of PV Module>

The degradation of the PV module 100 illustrated in FIG. 3 is due to UV and/or damp-heat stress as described above. The degradation of the PV module 100 due to UV and/or damp-heat stress is caused by the corrosion of the contact units (glass layer) 180, which are formed between the electrodes 170 and the semiconductor substrate, due to the acid generated in EVA due to the UV and/or damp-heat stress. As the contact units 180 between the electrodes 170 and the semiconductor substrate, a thin glass layer having a thickness of about 10 to 100 nm is formed. This glass layer has both electrical and mechanical bonding functions between the electrodes 170, which are made of Ag, and the semiconductor substrate, which is made of Si. Since this glass layer is thin, the electrical connection between the electrodes 170 and the semiconductor substrate is not impeded. Acid corrosion can occur at the electrodes 170 on both the front and back sides of the solar battery cell 130. However, since little UV light reaches the back side of the solar battery cell 130, damp-heat stress has a major influence on the electrodes 170 on the back side of the solar battery cell 130. Acid corrosion, as described above, can occur at the contact units 180. Such acid corrosion may also occur at the electrodes 170.

EVA contained in the encapsulants 140 and 150 generates acid (mainly acetic acid) under UV and/or damp-heat stress. If this acid corrodes, for example, the glass layer included in the contact units 180, the mechanical bonding function of the glass layer is lost. Even if the mechanical bonding function is retained at a certain level, the corrosion of the glass layer increases electrical resistance and deteriorates the electrical bonding function. If the mechanical bonding function and/or the electrical bonding function of each of the contact units 180 is lost by a certain amount, photogenerated carriers generated in Si cannot be extracted from the Ag electrode in response to the certain amount. In this manner, the solar cell characteristics of the PV module 100 deteriorate. The corrosion of the glass layer as described above can occur at the contact units 180. Corrosion of the glass layer like this can occur at the contact units 180 and/or the electrodes 170.

The corrosion of each contact unit 180 can be directly confirmed by, for example, performing cross-sectional SEM observation or EPMA analysis on the contact units 180. That is, the corrosion of the contact unit 180 can be recognized through the disappearance of the glass layer of the contact unit 180 (the void between Ag and Si) corresponding to the degree of corrosion, and/or compositional alteration of the glass layer. More simply, the presence and/or degree of corrosion of the glass layer can also be determined by looking at an EL image of the PV module. That is, the corrosion of the contact unit 180 can be recognized through, for example, the occurrence of a characteristic EL dark region corresponding to the degree of corrosion, and/or the expansion of that dark region.

The output characteristics of electric power from photovoltaic generation performed by the PV module 100 rapidly decrease when the UV and/or damp-heat stress reaches a certain amount. This phenomenon is the result of rapid corrosion of the contact units 180 due to an increase in acid described above. A guide for the occurrence of such a phenomenon is the point in time at which the acetic acid concentration (concentration of acetic acid molecules) in EVA reaches around $10^{19}/cm^3$. In this case, the concentration of acetic acid molecules refers to the number of acetic acid molecules per unit volume of EVA at, for example, 25°C (298.15 K) and 1 atmosphere. A state in which the output characteristics of electric power from photovoltaic power generation performed by the PV module 100 have rapidly decreased may be defined as a state in which the PV module 100 has already reached the end of its lifetime.

<Estimation of Lifetime of PV Module>

The following describes the principle of estimating, using the electronic device 1 according to an embodiment, the lifetime of a PV module based on degradation due to UV and/or damp heat. Hereafter, the estimation of the lifetime of a PV module based on degradation due to UV and/or damp heat, the estimation being performed by the electronic device 1 according to an embodiment, will also be referred to simply as "estimation of the lifetime" or "lifetime estimation".

First, the basic principles for estimation of the lifetime will be described. "Lifetime" estimated by the electronic device 1 according to an embodiment may be, for example, a time (period) from when the PV module starts to generate electric power until the UV and/or damp-heat stress reaches a certain amount and a rapid reduction in electric power output characteristics begins. Moreover, "lifetime" estimated by the electronic device 1 according to an embodiment may be, for example, a time (period) from when the PV module starts to generate electric power until the UV and/or damp-heat stress reaches a certain amount and the electric power output characteristics have rapidly decreased. "Lifetime" estimated by the electronic device 1 according to an embodiment may be, for example, a time (period) from when the PV module starts to generate electric power until the electric power output characteristic begins to rapidly decrease as described above and the electric power output reaches a predetermined degradation rate from its initial value. In these cases, the installation location and/or installation mode of the PV module may remain unchanged and the period of power generation may continue. "Lifetime" estimated by the electronic device 1 according to an embodiment may be, for example, a time (period) from when the installation location and/or installation mode of the PV module is changed until the UV and/or damp-heat stress reaches a certain amount and a rapid reduction in electric power output characteristics begins. "Lifetime" estimated by the electronic device 1 according to an embodiment may be, for example, a time (period) from when the installation location and/or installation mode of the PV module is changed until the UV and/or damp-heat stress reaches a certain amount and the electric power output characteristics have rapidly decreased. In the following, a guide for "lifetime" estimated by the electronic device 1 according to an embodiment is a period up to the point in time at which a curve factor (hereinafter also referred to as "FF characteristic") or generated electric power (hereinafter also referred to as "Pm characteristic") decreases by 10% compared to the initial value. In this case, the initial value may be defined as a measurement value immediately after completion of the PV module or the nominal maximum output (rated output) value stated in a catalog, label, or the like. However, the principle of estimation of lifetime performed by the electronic device 1 according to an embodiment may be employed even when no rapid reduction in electric power output characteristics is confirmed at a point in time at which the FF characteristics or Pm characteristics decrease by 10% compared to the initial value. In this case, the principle of estimation of lifetime performed by the electronic device 1 according to an embodiment is similarly valid even when the period up to a point in time at which the FF characteristics or Pm characteristics decrease to 10%, 20%, 30%, or the like of the initial value is treated as a guide of the lifetime. In this case, the output characteristics of the PV module are measured in accordance with the IEC 60891 standard (or JIS C8914).

As described above, the "lifetime" estimated by the electronic device 1 according to an embodiment is not necessarily limited to a time (period) assuming a case where a new PV module generates power immediately after its completion. For example, a case is also assumed in which, for example, the lifetime of a PV module has already generated power for a certain period of time in a field (market), such as a used PV module. In such a case, the "lifetime" estimated by the electronic device 1 according to an embodiment may be a time (period) from a starting point (year zero), which is a point in time after a certain period of time, until the electronic device 1 ends its lifetime after further continuing to generate power. The "lifetime" estimated by the electronic device 1 according to an embodiment may be a time (period) from a point in time at which the acetic acid concentration of a certain PV module is evaluated until the electric power output characteristics rapidly decrease. Moreover, the "lifetime" estimated by the electronic device 1 according to an embodiment may be a time (period) from a point in time at which the acetic acid concentration of a certain PV module is evaluated until the electric power output goes from the initial value to a predetermined degradation rate.

The applicant has developed a method to estimate, with reasonable and good accuracy, the lifetime of a PV module based on damp-heat degradation from information regarding the acetic acid concentration in EVA serving as the encapsulant of the PV module. Therefore, the following is a description of such a method. With the electronic device 1 according to an embodiment, the lifetime of a PV module based on damp-heat degradation can be estimated with reasonable and good accuracy, based on information regarding the acetic acid concentration in EVA serving as the encapsulant of the PV module.

Patent Literature 4 described above mentions a method for estimating degradation of a PV module from measurement information using a Raman spectrometer. According to this method, Raman spectroscopy measurements need to be performed before and after a predetermined time elapses, that is, at multiple different times (multiple times). Thus, according to this method, a reasonable amount of time (for example, a period on a yearly basis) is needed to obtain, for example, information for estimating the period until the end of the lifetime of a PV module. Therefore, this method has an aspect that makes it difficult to be highly practical.

Even if Raman spectroscopy measurements are performed before and after a reasonable amount of time has elapsed, for example, using the method described above, a case is possible where the installation location and/or installation mode of the PV module is changed thereafter. In such a case, according to the method described above, Raman spectroscopy measurements need to be performed before and after a predetermined amount of time has elapsed after the installation location and/or installation mode of the PV module is changed. For example, Raman spectroscopy measurements need to be performed at a point in time at which the installation location and/or installation mode of the PV module is changed and a point in time after a reasonable amount of time (for example, a period on a yearly basis) has elapsed from the point in time at which such a change was made (namely, at multiple points in time). Therefore, this method still has an aspect that makes it difficult to be highly practical.

In contrast, the electronic device 1 according to an embodiment can estimate the lifetime (for example, remaining lifetime in years) of a PV module based on damp-heat degradation, for example, by performing a Raman spectroscopy measurement at a single time.

<Logic Flow for Lifetime Expectation>

FIG. 4 is a diagram illustrating a logic flow of lifetime estimation according to an embodiment. FIG. 4 schematically illustrates a logic flow when the electronic device 1 according to an embodiment performs lifetime estimation. As illustrated in FIG. 4, the electronic device 1 according to an embodiment may perform lifetime estimation based on the following logic flow.

As illustrated in Step S1 in FIG. 4, the controller 10 of the electronic device 1 acquires information A0 regarding the acetic acid concentration at a predetermined point in time in the encapsulant (EVA) of a PV module whose lifetime is desired to be estimated. In this case, the predetermined point in time may be, for example, the current point in time or a point in time at which the lifetime of the PV module is estimated. Specifically, the predetermined point in time may be immediately after the PV module is manufactured or a point in time several years after the PV module has been installed in the field. In this manner, in an embodiment, even if the PV module is immediately after manufacture or has been installed in the field for several years, the point in time at which the information A0 regarding the acetic acid concentration is acquired may be defined as time zero (that is, A0 may be defined as an initial value). In this case, the electronic device 1 according to an embodiment can estimate the remaining time (such as years) from the point in time at which the acetic acid concentration is A0 until the PV module reaches the end of its lifetime.

In Step S1, three methods are described as examples to acquire the information A0 regarding the acetic acid concentration in the encapsulant (EVA) of the PV module. The controller 10 of the electronic device 1 according to an embodiment may perform at least one of the three methods (a method A, a method B, and a method C) to acquire the information A0 regarding the acetic acid concentration in the encapsulant (EVA) of the PV module. The three methods are described below as examples, but the methods are not limited to these three methods. Any method may be employed as long as information regarding the acetic acid concentration can be obtained directly or indirectly.

(Method A:Ion Chromatography Analysis)

In ion chromatography analysis, information regarding the acetic acid concentration in EVA can be obtained by analyzing EVA recovered from a PV module using a predetermined method and/or condition. This method is a destructive analysis because EVA needs to be recovered from the PV module.

In ion chromatography analysis, the concentration of acetic acid (precisely, the concentration of acetate ion $CH_3COO^-$) is usually obtained in units of [μg/g]. Equation (1) below can be used to convert the acetic acid concentration in units of [μg/g] into the acetic acid concentration in units of [/cm3]. In Equation (1) below, the molecular weight of acetic acid is 60 g/mol, and the Avogadro constant is $6.022 \times 10^{23}$.

$$[/\mathrm{cm}^3] = [\mu\mathrm{g/g}] \times 10^{-6} \times 6.022 \times 10^{23}/60 \approx [\mu\mathrm{g/g}] \times 10^{16} \quad (1)$$

In Equation (1) above, when a more precise value is needed, 60 in Equation (1) above may be replaced with 59, considering that the molecular weight of acetate ion ($CH_3COO^-$) is 59 g/mol.

In this case, the concentration of acetate ion $CH_3COO^-$ obtained through ion chromatography analysis is the concentration of the sum of molecules present as $CH_3COOH$ and molecules present being ionized as $CH_3COO^-$ in EVA. When measured using ion chromatography, $CH_3COOH$ is completely ionized and measured in the form of $CH_3COO^-$. That is, the concentration of acetate ion $CH_3COO^-$ obtained through ion chromatography analysis may be considered to indicate the total acetic acid concentration present in EVA (the concentration of initially present acetic acid and the concentration of acetic acid formed by hydrolysis).

Next, a specific example of an ion chromatography analysis is further described. The ion chromatographic analysis described above can be performed, for example, in accordance with a specific procedure described below.

[A-1] Disassemble a PV module and collect the EVA (for example, the EVA that is about 2.5 cm × 6 cm in size and between tabs near the center of the cell may be collected).
[A-2] Place the EVA sample together with ultrapure water into a PP (polypropylene) bag and boil the PP bag (for example, the PP bag may be boiled at 90°C for 2 hours).
[A-3] Acetate ions in the boiled solution are quantitatively analyzed by an ion chromatography analyzer.

In [A-1] of the procedure described above, the tabs (also referred to as interconnectors) are connecting members that connect adjacent cells in series. In a type of solar battery cell with electrodes on both surfaces thereof, the tabs connected to the electrodes on the front surface of the solar battery cell are connected to the electrodes on the back surface of the adjacent solar battery cell. Two to twelve tabs are connected to the electrodes (busbar electrodes) on one side surface. The location from which the EVA is collected may be near the center of the solar battery cell. Note that the EVA may be collected that is not on the tabs but between the adjacent tabs and on the front surface side.

In [A-2] of the procedure described above, the PP bag is not specifically limited to a bag made of PP. As an example, the sample may be placed in a predetermined container, such as a polypropylene bag.

In [A-3] of the procedure described above, the ion chromatography analyzer may be, for example, ICS-2100 manufactured by DIONEX.

(Method B: pH Analysis)

In pH analysis, information regarding acetic acid concentration can be obtained by analyzing an encapsulant recovered from a PV module, using a predetermined method and/or condition. This method, similar to ion chromatography analysis, is also a destructive analysis because EVA needs to be recovered from the PV module.

The pH information can be converted into acetic acid concentration information, for example, as follows. That is, pH measurements may be performed beforehand on multiple encapsulant samples with different acetic acid concentrations to obtain a correspondence (correlation) between acetic acid concentration (which is obtained using, for example, ion chromatography) and pH. FIG. 5 is a graph illustrating an example of the correspondence between pH and acetic acid concentration. Multiple encapsulant samples with different acetic acid concentrations can be obtained, for example, by submitting PV modules to a high-temperature high-humidity test to prepare multiple PV modules with different test durations.

Next, a specific example of pH analysis is further described. The pH analysis described above can be performed, for example, in accordance with a specific procedure described below.

[B-1] Disassemble a PV module and collect the EVA (for example, the EVA that is about 2.5 cm × 2.5 cm in size and between tabs near the center of the cell may be collected).
[B-2] Cut the EVA sample into 2 mm squares and weigh it into a vial.
[B-3] Add an amount of pure water approximately 10 times the weight of the EVA sample to the vial and store it in a refrigerator (the vial may be stored for 4 days, for example).
[B-4] The solution in the vial is measured by a pH meter.

In [B-1] of the procedure described above, the tabs are connecting members that connect adjacent cells in series. In a type of solar battery cell with electrodes on both surfaces thereof, the tabs connected to the electrodes on the front surface of the solar battery cell are connected to the electrodes on the back surface of the adjacent solar battery cell. Two to twelve tabs are connected to the electrode (busbar electrode) on one side. The location from which the EVA is collected may be near the center of the solar battery cell. Note that the EVA may be collected that is not on the tabs but between the adjacent tabs and on the front surface side.

In [B-4] of the procedure described above, the stored vial may be removed from the refrigerator, and pH measurement may be performed after the solution becomes room temperature. The pH meter may be, for example, a LAQUA twin AS-pH-22 (manufactured by HORIBA, Ltd.). In [B-4] of the procedure described above, the acetic acid concentration may be obtained from a graph illustrating a correlation between pH and acetic acid concentration, as illustrated in FIG. 5, for example.

In (Method A:Ion Chromatography Analysis) and (Method B:pH Analysis) described above, the following points are to be noted. First, desirably, EVA samples are to be taken at the same location for comparison because an EVA sample at a cell edge and an EVA sample at the center have different values obtained through measurement. Furthermore, once a PV module is disassembled, components tend to leach out from the disassembled portion relatively quickly; therefore, desirably, the EVA sample is not to be reused. Furthermore, if a crack is present in the backsheet at a point in time at which a PV module installed in the field is retrieved, attention is to be paid to the effect of component leaching.

(Method C: Measurement using Raman Spectroscopy)

In Raman spectroscopy measurement (Raman measurement), information regarding acetic acid concentration can be obtained from information regarding the signal intensity of fluorescence generated (Raman signal intensity) by irradiating the encapsulant of a PV module with probe light using a specified method and/or condition. This method is a nondestructive analysis because the encapsulant does not need to be recovered from a PV module.

The information regarding Raman signal intensity can be converted into acetic acid concentration information, for example, as follows. That is, Raman measurements may be performed beforehand on multiple encapsulant samples with different acetic acid concentrations to obtain a correspondence between acetic acid concentration (which is obtained using, for example, ion chromatography) and Raman signal intensity. FIG. 6 is a graph illustrating an example of a correspondence (correlation) between Raman signal intensity ratio and acetic acid concentration. Multiple encapsulant samples with different acetic acid concentrations can be obtained, for example, by submitting PV modules to a high-temperature high-humidity test to prepare multiple PV modules with different test durations.

In Raman measurement, a handheld-type (mobile-type) Raman measurement device that can be used outdoors can be used. By using such a measurement device, a PV module does not need to be retrieved from the installation site, and measurement can be performed at the site where the PV module is installed. Thus, Raman measurement can be said to be an extremely convenient and economical method.

In Raman measurement, measurement values may be obtained at multiple locations in a plane of a PV module. In that case, if there is no large distribution difference in the Raman signal intensity values, a mean value can be adopted. In contrast, if there is a large distribution difference in Raman signal intensity, the value with the highest signal intensity can be adopted. In this case, the time remaining until the end of the lifetime of a PV module (for example, the number of years) estimated using a method described below will be the smallest value. This is a desirable method when one wants to estimate the lifetime of a PV module in a safety-critical manner (for example, when one allows a shorter estimated lifetime but does not want to overestimate it). A mean value and a distribution width ($2\sigma$ or $3\sigma$) can also be obtained from the distribution of signal intensity. In this case, the estimated value for the time remaining until the end of the lifetime of the PV module (for example, the number of years) obtained using the method described below can also be treated as information with a distribution. In other words, the estimated value for the lifetime of the PV module obtained using [mean value -

distribution width] can be used as a guide for the lower limit of the lifetime. The estimated value for the lifetime of the PV module obtained using [mean value] can be used as a guide for the mean value of the lifetime. The estimated value for the lifetime of the PV module obtained using [mean value + distribution width] can be used as a guide for the upper limit of the lifetime.

Next, a specific example of Raman measurement will be further described using measurement performed through laser Raman analysis as an example. FIG. 7 is a graph illustrating an example of Raman spectroscopy measurement performed through laser Raman analysis. FIG. 7 will be described in detail below.

In FIG. 7, samples used as targets for laser Raman analysis are damp-heat test specimens tested under the conditions of 125°C and 95% relative humidity. FIG. 7 illustrates the Raman spectra of the prepared samples for which the durations of a damp-heat test (levels of damp-heat stress) are different, the Raman spectra being obtained by performing laser Raman analysis on each sample. The horizontal axis of the graph illustrated in FIG. 7 indicates Raman shift, and the vertical axis indicates Raman signal intensity. In this case, nine samples are analyzed, so that nine Raman spectra are also illustrated. In the graph illustrated in FIG. 7, for each Raman spectrum, the corresponding damp-heat test duration is illustrated. From FIG. 7, it can be seen that the Raman signal intensity increases with increasing damp-heat test duration. Damp-heat stress changes the bonding state of the encapsulant at the molecular level. The change in the Raman spectrum (change in signal intensity) is thought to correspond to changes in such bonding states. Reactions involved in the change in the bonding state of the encapsulant at the molecular level due to damp-heat stress include a hydrolysis reaction, which will be described below. When the encapsulant is EVA, acetic acid is formed through a hydrolysis reaction as described below. Due to such a background, the correlation between Raman signal intensity and acetic acid concentration in the encapsulant is expected to occur, as illustrated in FIG. 6.

When the Raman spectroscopy measurement described above is performed through laser Raman analysis, the Raman spectroscopy measurement can be performed in accordance with a specific procedure described below, for example.

[C-1] Transmit laser light through the glass surface of a PV module and measure the Raman signal intensity of EVA on the front side (for example, the laser light may be focused at the interface between the glass and EVA).

[C-2] Prepare a correlation graph between the signal intensity ratio (fluorescence intensity ratio) in Raman measurement and acetic acid concentration obtained through ion chromatography analysis in advance (In this case, the signal intensity ratio in Raman measurement may be set to a value obtained by dividing, for example, the Raman signal intensity excluding peaks in a Raman shift range of 1800 to 2500 $cm^{-1}$ by the Raman signal intensity (maximum intensity) due to CH around a Raman shift of 2800 $cm^{-1}$. That is, the target Raman signal intensity may be normalized by the reference Raman signal intensity. Using the signal intensity ratio obtained in this manner, a correlation graph between Raman signal intensity ratio (fluorescence intensity ratio) and acetic acid concentration can be prepared.)

[C-3] Estimate acetic acid concentration from the correlation graph

In [C-1] of the procedure described above, an excitation laser whose wavelength range is about 500 to 560 nm can be used. Specifically, the wavelength of the excitation laser may be set to, for example, 532 nm or 515 nm. A laser Raman spectrometer may be, for example, HR-800 (manufactured by HORIBA, Ltd.).

In [C-2] of the procedure described above, the correlation graph to be prepared in advance may be, for example, as illustrated in FIG. 6. The CH maximum intensity near the Raman shift of 2800 $cm^{-1}$ may be treated as the peak intensity of the methylene group. In [C-2] of the procedure described above, the Raman signal intensity excluding the peaks in the range of 1800 to 2500 $cm^{-1}$ may be selected at any Raman shift within this range (The signal intensity will be approximately the same value at any Raman shift in this range). Moreover, in [C-2] of the procedure described above, the Raman signal intensity excluding the peaks in the range of 1800 to 2500 $cm^{-1}$ may be a mean value of signal intensity excluding peak signal intensities within this range. In this case, the Raman signal intensity ratio (fluorescence intensity ratio) can be given as [signal intensity in 1800 to 2500 $cm^{-1}$]/[signal intensity near Raman shift of 2800 $cm^{-1}$].

The correlation graph used in [C-3] of the procedure described above may be, for example, as illustrated in FIG. 6. The Raman signal intensity ratio increases as the acetic acid concentration increases. The acetic acid concentration increases as the level of damp-heat stress increases. In FIG. 6, the longer the duration of the high-temperature high-humidity test, the higher the acetic acid concentration and the higher the Raman signal intensity ratio.

In (Method C: Measurement using Raman Spectroscopy) described above, the following points are to be noted. First, stable measurement results can be obtained by fixing the laser focus at the same location (for example, at the interface between the glass and EVA). Thus, adjustment of the measurement conditions according to the thickness of the surface glass is recommended. The Raman signal intensity (fluorescence intensity) is actually increased by being affected not only by damp heat but also by UV (described below). The method of normalization is not specifically limited to the method described above as long as it corresponds to the acetic acid concentration.

<Preparation for Estimating Change in Acetic Acid Concentration Over Time (Temporal Evolution of Acetic Acid Concentration)>

Next, as illustrated in Steps S2 to S5 in FIG. 4, the controller 10 of the electronic device 1 prepares various physical quantities (calculates various physical quantities) to estimate the change in the acetic acid concentration over time (the temporal evolution of the acetic acid concentration) in the encapsulant within the use environment of a PV module whose lifetime is to be estimated. Specifically, in Step S2, the controller 10 may calculate a coefficient B0 for acetic acid formation reaction. In Step S3, the controller 10 may calculate an activation energy Ea for acetic acid formation reaction. In Step S4, the controller 10 may calculate an annual effective temperature Teff of the PV module. In Step S5, the controller 10 may calculate a daily effective stress duration Heff. Specifically, the activation energy Ea for acetic acid formation reaction and the coefficient B0 for acetic acid formation reaction can be calculated, for example, based on results of the temporal evolution of acetic acid concentration from the damp-heat test at different temperatures. The annual effective temperature Teff and the daily effective stress duration Heff of the PV module can be calculated based on the temperature of the PV module measured throughout the year within the use environment.

In this case, the following examples can be given as examples of damp-heat test methods. That is, a PV module is exposed to a predetermined atmosphere by installing it in a constant-temperature constant-humidity test chamber that is set to have a predetermined temperature condition and a predetermined humidity condition. As the temperature condition, a temperature range of 80 to 135°C is used. As the humidity condition, a humidity range of 85 to 95% relative humidity is used. In this manner, the temperature condition and the humidity condition may be set as appropriate. For example, a damp-heat test may be performed under conditions of a temperature of 85°C and a humidity of 85%. When acetic acid concentration is measured using (Method A: Ion Chromatography Analysis) and (Method B: pH Analysis), multiple PV modules of the same specifications are prepared and installed in the test chamber. Then, by removing at least one PV module for each of different predetermined durations and measuring acetic acid concentration in the encapsulant inside the PV module, the temporal evolution of acetic acid concentration can be obtained. When acetic acid concentration is measured using (Method C: Measurement using Raman Spectroscopy), a PV module is removed from the test chamber at predetermined time intervals and then the acetic acid concentration of the PV module is measured. The PV module is then placed in the test chamber again and exposed to the predetermined atmosphere. By repeating this process, the temporal evolution of acetic acid concentration can be obtained.

When performing operations in Steps S2 to S5, the controller 10 may acquire installation information regarding a PV module whose lifetime is to be estimated and that is installed or is to be installed in the field. Specifically, the controller 10 may acquire information such as the installation region (installation location), installation configuration (installation manner), and installation period (in years) of the PV module whose lifetime is to be estimated. The controller 10 may prompt the user to input the aforementioned information via the input unit 20 or may acquire the aforementioned information from an external source via the communication unit 40.

In Steps S2 to S5, the controller 10 may prompt the user to input installation information regarding the PV module whose lifetime is to be estimated. The installation information regarding the PV module may be, for example, information regarding the installation region (location of the installed field), the installation configuration (manner in which the PV module is installed in the field), and the installation period (period (for example, years) of installation in the field).

Information regarding the installation region (location of the installed field) may be, for example, the address or location (latitude and longitude and/or place name) where the PV module is installed. Based on the information regarding the installation region, the controller 10 may obtain temperature information published by the Japan Meteorological Agency, for example, in or around the installation region via the communication unit 40.

Information regarding the installation configuration (manner in which the PV module is installed in the field) may be information such as whether the PV module whose lifetime is to be estimated is installed on the ground, on a standing seam roof, or on a residential rooftop. PV modules tend to reach higher temperatures when installed on the ground, on a standing seam roof, and on a residential rooftop, in that order. This is due to the fact that the ease of heat dissipation from the back side of a PV module depends on the installation configuration of the PV module. A ground-mounted PV module have an open space on the backside of the PV module, allowing air to pass through easily and facilitating heat dissipation. Thus, the temperature of a ground-mounted PV module is relatively low. A PV module on a residential roof has a relatively small space on the backside of the module, making it difficult to dissipate heat. Thus, the temperature of a PV module on a residential roof is relatively high.

Information regarding an installation period (installation period in the field (for example, years)) may be defined as information regarding the period over which a PV module whose lifetime is to be estimated is installed in the field (for example, the number of years (Y0 [years])).

In Steps S2 to S5, instead of prompting the user to input installation information regarding the PV module, the controller 10 may acquire installation information regarding the PV module from an external device via the communication unit 40.

The following is a description of equations for estimating the change in acetic acid concentration in the encapsulant of a PV module over time. First, an equation for estimating the change in acetic acid concentration over time based on a hydrolysis reaction catalyzed by the acid in the encapsulant (EVA) of a PV module is derived. Then, a method for handling the temporal evolution of acetic acid concentration in the environment of a field in which the temperature of the PV module fluctuates is described.

<Equation for Estimating Temporal Evolution of Acetic Acid Concentration Based on Hydrolysis Reaction Catalyzed by Acid in EVA>

Acetic acid is known to be formed by a hydrolysis reaction of EVA. FIG. 8 is a graph illustrating the temporal evolution of acetic acid concentration [/cm$^3$] in EVA when the PV module was subjected to a high-temperature high-humidity test. In this case, the acetic acid concentration [/cm$^3$] is based on acetic acid concentration [$\mu$g/g] obtained using ion chromatography. As illustrated in FIG. 8, the acetic acid concentration increases exponentially with time. This exponential increase suggests that the hydrolysis reaction is an acid-catalyzed hydrolysis reaction. That is, the hydrolysis reaction of EVA is accelerated by $H^+$ ($H_3O^+$) serving as a catalyst, which is released by acetic acid itself formed through the reaction as illustrated in FIG. 9.

In this case, the acid-catalyzed hydrolysis reaction is described by the reaction equation expressed in Equation (2) below.

$$\text{EV-A} + H_2O + n\bullet H_3O^+ \rightarrow \text{EV-OH} + \text{AH} + n\bullet H_3O^+ \qquad (2)$$

In Equation (2) above, A represents an acetate group (acetate group), AH represents acetic acid, and EV-A represents EVA (Ethylene Vinyl Acetate). OH represents an OH group. EV-OH represents the state in which an OH group is bonded in place of the acetate group A of EVA-A. In this case, a differential equation describing the temporal evolution of acetic acid concentration [AH] can be expressed in Equation (3) below (hereinafter, the unit of concentration is [/cm$^3$]).

$$d[\text{AH}]/dt = C\bullet[\text{EV-A}]\bullet[H_2O]\bullet\{1 + \alpha\bullet[H_3O^+]^n\} \qquad (3)$$

In this case, since sufficiently $1 \ll \alpha\bullet[H_3O^+]^n$, Equation (4) below can be assumed to hold.

$$d[\text{AH}]/dt = C\bullet[\text{EV-A}]\bullet[H_2O]\bullet\alpha\bullet[H_3O^+]^n \qquad (4)$$

In Equation (4) above, a coefficient C is a parameter related to the rate of hydrolysis reaction in the absence of acid catalysis. A coefficient $\alpha$ is a parameter that represents the degree of effect of acid catalysis in the presence of acid catalysis. Both of these parameters may be defined as values determined experimentally. It can also be said that $C\bullet\alpha$, which is the product of the coefficient C and the coefficient $\alpha$, is a parameter determined experimentally.

The acetic acid ionization reaction (instantaneous equilibrium) is described in Equation (5) below.

$$\text{AH} + H_2O \leftrightarrow A^- + H_3O^+ \qquad (5)$$

In this case, when using an equilibrium constant Keq, an equilibrium equation, such as Equation (6) below, holds.

$$\text{Keq} = \{[A^-]\bullet[H_3O^+]\}/\{[\text{AH}]\bullet[H_2O]\} \qquad (6)$$

In this case, within the EVA system under consideration, when the presence of molecules acting as acid other than acetic acid or alkaline components can be sufficiently neglected, it can be assumed that $[A^-] \approx [H_3O^+]$. Therefore, Equation (7) below holds.

$$[H_3O^+]^2 = \text{Keq}\bullet[\text{AH}]\bullet[H_2O] \qquad (7)$$

From Equations (4) and (7) above, Equation (8) below can be derived.

$$d[\text{AH}]/dt = C\bullet[\text{EV-A}]\bullet[H_2O]\bullet\alpha\bullet\{\text{Keq}\bullet[\text{AH}]\bullet[H_2O]\}^{(n/2)} \qquad (8)$$

In this case, B is defined by Equation (9) below.

$$B = C \bullet [EV\text{-}A] \bullet [H_2O] \bullet \alpha \bullet \{Keq \bullet [H_2O]\}^{(n/2)} \quad (9)$$

From Equations (8) and (9) above, Equation (10) below can be derived.

$$d[AH]/dt = B \bullet [AH]^{(n/2)} \quad (10)$$

The solution to Equation (10) above is expressed by Equations (11) and (12) below.

When

$$n = 1: [AH] = (B/2)^2 \bullet t^2 \quad (11)$$

When

$$n = 2: [AH] = A0 \bullet \exp(B \bullet t) \quad (12)$$

In this case, it is the latter case n = 2 (Equation (12)) that can explain the experimental fact (the exponential increase in acetic acid concentration). A0 is the acetic acid concentration at t = 0, namely, the initial value. A0 can be obtained by analyzing the EVA of the PV module before it is subjected to the high-temperature high-humidity test (for example, it can be analyzed using ion chromatography).

Hereinafter, Equation (12) will be expressed by Equation (13) below.

$$A(t) = A0 \bullet \exp(B \bullet t) \quad (13)$$

In this case, Equation (10) for n = 2 is written as Equation (14) below.

$$d[AH]/dt = B \bullet [AH] \quad (14)$$

In this case, B is expressed by Equation (15) below.

$$B = C \bullet [EV\text{-}A] \bullet [H_2O]^2 \bullet \alpha \bullet Keq \quad (15)$$

As can be seen from the above, B includes the effect of moisture concentration $[H_2O]$ in EVA. That is, the acetic acid formation reaction is thought to accelerate with higher water concentration in the EVA. This is relevant to humidity correction in the remaining lifetime estimation described later. It is to be noted, however, that the absolute humidity in the air is not the only factor that determines the moisture concentration in EVA.

That is, resin encapsulant has a material-specific moisture adsorption property (ability to retain moisture). Thus, even if the absolute humidity in the air were to decrease by half (decrease rate = 50%), the decrease in moisture concentration in EVA would remain considerably smaller than half (decrease rate < 50%).

FIG. 10 is a graph illustrating an example of the temporal evolution of acetic acid concentration from a damp-heat test at different temperatures. In FIG. 10, analytical values of acetic acid concentration at each time point are indicated by black circles (•) and white circles (◦). FIG. 10 illustrates that the higher the temperature, the faster the rate of acetic acid formation. This temperature dependence is considered to be described by the Arrhenius equation. That is, B in Equation (15) above can be considered to be rewritten by Equation (16) below.

$$B = B0 \bullet \exp(-qEa/kT) \quad (16)$$

In Equation (16) above, q represents the elementary charge, k represents Boltzmann's constant, T represents the absolute temperature [K], B0 represents the coefficient, and Ea represents the activation energy of the reaction [eV]. In addition, qEa means q × Ea, and kT means k × T. B0 and Ea are physical quantities determined experimentally. By comparing Equation (16) above with Equation (15) above, it can be seen that B0 contains information regarding the moisture concentration $[H_2O]$ in the EVA.

From Equations (13) and (16) above, Equation (17) below can be obtained.

$$A(t) = A0 \cdot \exp(B0 \cdot \exp(-qEa/kT) \cdot t) \quad (17)$$

In this case, B0 and Ea can be uniquely obtained such that Equation (17) describes experimental results (that is, in such a manner that Equation (17) fits the experimental results). The experimental results to be used may be information regarding the damp-heat test specimen, including the temperature conditions and test results (acetic acid concentrations and test durations) of the damp-heat test. Additionally, the experimental results to be used may be information regarding a field-installed item, such as the installation period, temperature (for example, annual effective temperature), and acetic acid concentration of the PV module installed in the field. Furthermore, the experimental results to be used may be a combination of information from the damp-heat test specimen and information from the field-installed item. That is, the experimental results to be used may include information based on at least two levels of temperature conditions. For example, these two levels may be two levels for the experimental temperature, two levels for the annual effective temperature of a panel in the field (described below), or a combination of one level for the experimental temperature and one level for the field temperature. Specifically, B0 and Ea can have values as follows. In this case, the unit of time t is [h].

$$B0 \approx 1.6 \times 10^7$$

$$Ea \approx 0.72 \text{ eV}$$

The above may be considered to correspond to the processes performed in Steps S2 and S3 illustrated in FIG. 4.

In the damp-heat test illustrated in FIG. 10, PV modules that served as test specimens were those that had not yet been installed in the field after manufacture (those that were immediately after manufacture). For each PV module, the acetic acid concentration (an initial value AO) at a point in time at which the damp-heat test was started, the point in time being set as time 0, was $A0 \approx 2 \times 10^{17}$ [/cm$^3$].The acetic acid concentration immediately after manufacture (the initial value AO) may vary to some extent depending on the type and/or specifications of the PV module (differences in the specifications of the EVA used and/or the process conditions for the manufacture of the PV module). When a more accurate value is needed as the acetic acid concentration immediately after manufacture (the initial value A0), the value can be obtained for the PV module before the damp-heat test by using a method using Raman measurement described above or the like, depending on the type and/or specifications of the PV module. When an accurate initial value is unknown, a value around $2 \times 10^{17}$ [/cm$^3$], which is the acetic acid concentration described above, can be used as a guide value for A0.

FIG. 11 is a graph illustrating the results of the calculation according to Equation (17) using the values of A0, BO, and Ea described above, together with the experimental results. In FIG. 11, the calculation results are indicated by a solid line and a dotted line. As illustrated in FIG. 11, it can be confirmed that the above-described calculation results make it possible to reproduce the experimental results with good accuracy. This indicates the validity of the values of B0 and Ea obtained as described above. Note that the value of B0 described above (about $1.6 \times 10^7$) is obtained under a high humidity condition (about 85 to 95% relative humidity). Under the humidity condition (relative humidity $\leq$ about 85%) in the actual field environment (outdoor environment), appropriate corrections may be made as described below.

B0 and Ea described above can be regarded as essentially EVA-specific values. Thus, for B0 and Ea, the above-described values can be used as guide values for a PV module that uses EVA as the encapsulant. Note that these values of B0 and Ea may vary slightly, depending on additives added to EVA and/or heat treatment conditions of EVA (conditions in a lamination process and/or a cross-linking process). Therefore, when it is desired to obtain B0 and Ea more accurately, the results of the damp-heat test for two levels may be acquired for temperatures as illustrated in FIG. 10, depending on the type and/or specifications of the PV module (differences in the specifications of the EVA used and/or the process conditions for the manufacture of the PV module). In this case, B0 and Ea may be obtained that provide Equation (17), which best reproduces the test results as illustrated in FIG. 11. In this case, the initial value A0 of the acetic acid concentration can be obtained for the PV module before the damp-heat test by using a method using Raman measurement described above or the like.

For example, if a target PV module has already been installed in the field for a certain period of time, the values (B0 $\approx 1.6 \times 10^7$, Ea $\approx$ 0.72 eV> described as the guide values for B0 and Ea can be used. When it is desired to obtain B0 and Ea more accurately, a necessary number of PV modules installed in the field may be retrieved and the results of the damp-heat test for two levels may be acquired for temperatures as illustrated in FIG. 10. In this case, B0 and Ea may be obtained that provide Equation (17), which best reproduces the test results as illustrated in FIG. 11. The acetic acid concentration at a point in time after the PV module has been installed in the field for a certain period of time (this is the initial value AO) can be determined for the PV module before the damp-heat test by using a method using Raman measurement described above or the like. In particular, when a handheld-type (mobile-type) Raman measurement device is used, the acetic acid concentration (the initial value AO) of the PV module can be obtained while it is still installed in the field. Generally, the acetic acid concentration of the PV module at a point in time after the PV module has been installed in the field for a certain period of time (the initial value A0) increases in response to environmental stress received in the field, relative to the acetic acid concentration at a point in time immediately after the PV module was manufactured. For the acetic acid concentration of the PV module at a point in time after the PV module has been installed in the field for a certain period of time (the initial value AO), the increase relative to the concentration immediately after manufacture may vary, depending on its field installation period (in years) and/or installation configuration.

<Method for Handling Temporal Evolution of Acetic Acid Concentration in Field Environment Where PV Module Temperature Fluctuates>

Next, a method for estimating the temporal evolution of acetic acid concentration under field installation conditions under which the temperature of a PV module fluctuates. This may be considered to correspond to the processes performed in Steps S4 and S5 illustrated in FIG. 4. In this case, a method is described in which the concept of the annual effective temperature of the PV module (hereinafter also simply described as "annual effective temperature") and the concept of daily effective stress duration (hereinafter also simply described as "effective stress duration") are used.

<When PV Module Temperature Information is Available>

First, a case will be described in which the temperature of the PV module is measured and known throughout the year. In this case, Equation (18) below is obtained.

$$\Sigma\{\exp(-qEa/kT)\cdot\Delta t\} = \exp(-qEa/kTeff)\cdot 365\cdot Heff \quad (18)$$

where qEa means q $\times$ Ea and kTeff means k $\times$ Teff.

Equation (18) above allows a time-integrated reaction rate (the left-hand side of the equation) to be expressed using Teff and Heff (in the right-hand side of the equation), in a reaction that generally proceeds at a rate proportional to exp(-qEa/kT). In this case, exp(-qEa/kT) can be interpreted as an amount corresponding to an indicator of thermal stress per unit time for a reaction whose activation energy is Ea. Equation (18) above can also be interpreted as allowing time-integrated thermal stress (the left-hand side of the equation) to be expressed using Teff and Heff (in the right-hand side of the equation). The use of Teff and Heff makes it significantly easier to calculate the annual change in acetic acid concentration over time, as described below.

In Equation (18) above, Σ represents the cumulative sum (total sum) over time intervals of Δt throughout the year, where Δt denotes the time step for accumulation. Teff represents the annual effective temperature of the PV module, and Heff represents the daily effective stress duration available throughout the year. The units for T and Teff are absolute temperatures [K]. exp(-qEa/kT) and exp(-qEa/kTeff) are proportional to the amount of thermal stress per unit time. Δt and Heff can be in the same unit of time, for example, in minutes [min] or in hours [h]. In an example where [h] is adopted as the unit of time, Δt = 1 [h], and Heff can be 4.0 [h] ± about 0.4 [h].

Solving Equation (18) above for Teff can yield Equation (19) below. This may be considered to correspond to the process performed in Step S4 illustrated in FIG. 4.

$$Teff = (-qEa/k)/\ln[\Sigma\{\exp(-qEa/kT)\cdot\Delta t\}/(Heff\cdot 365)] \quad (19)$$

That is, if a PV module temperature T at each time interval Δt is known throughout the year, the annual effective temperature Teff can be calculated using Equation (19) above. Then, by using the annual effective temperature Teff expressed by Equation (19) above, the annual change in acetic acid concentration over time in the EVA of the PV module can be estimated by Equation (20) below.

$$A(Y) = A0\cdot\exp(B0\cdot\exp(-qEa/kTeff)\cdot Heff\cdot 365\cdot Y) \quad (20)$$

In Equation (20) above, A0 represents the initial acetic acid concentration, Y represents the number of years (unit: [Y]), and A(Y) represents the acetic acid concentration Y years after the point in time when the acetic acid concentration is A0 (at the zero year point).

<When PV Module Temperature Information Is Unavailable>

Next, a case will be described in which measurement information regarding the temperature of a PV module is unavailable. When measurement information regarding the temperature of a PV module is unavailable, air temperature information and a guide value ΔT for each installation configuration of the PV module are used to obtain estimated temperature values for the PV module. In this case, each guide value ΔT is the temperature difference between the temperature of the PV module and the air temperature during the PV module's power generation, and is given for the corresponding installation configuration of the PV module as in the following.

Ground-mounted installation:

$$\Delta T = 25°C \pm 5°C$$

Standing seam roof installation:

$$\Delta T = 30°C \pm 5°C$$

Residential rooftop installation:

$$\Delta T = 35°C \pm 5°C$$

The applicant confirmed from previous studies that the relational expression in Equation (21) below can be obtained.

$$\Sigma\{\exp(-qEa/kTmp)\bullet Heff\} = \exp(-qEa/kTeff)\bullet 365\bullet Heff \quad (21)$$

In Equation (21) above, Σ is the cumulative sum (total sum) of values for each of the 365 days throughout the year. Tmp is the daily maximum temperature of the PV module in units of [K] throughout the year and can be obtained from Equation (22) below.

$$Tmp = Tmax + \Delta T \quad (22)$$

In Equation (22) above, Tmax is the daily maximum temperature in units of [K] throughout the year. For Tmax, air temperature information related to the installation location of the PV module can be used if such information is available from the air temperature information published by the Japan Meteorological Agency or the like. If air temperature information at the installation location of the PV module is unavailable, air temperature information at a location close to the installation location of the PV module can be used.

Solving Equation (21) above for Teff can yield Equation (23) below.

$$\begin{aligned} Teff &= (-qEa/k)/\ln[\Sigma\{\exp(-qEa/kTmp)\bullet Heff\}/(Heff\bullet 365)] \\ &= (-qEa/k)/\ln[\Sigma\{\exp(-qEa/kTmp)\}/365] \quad (23) \end{aligned}$$

If the annual effective temperature Teff expressed by Equation (23) above is used, the annual change in acetic acid concentration over time in the EVA of the PV module can be estimated by Equation (24) below.

$$A(Y) = A0\bullet \exp(B0\bullet \exp(-qEa/kTeff)\bullet Heff\bullet 365\bullet Y) \quad (24)$$

<When using Monthly Mean Maximum Temperature Instead of Daily Maximum Temperature>

The same estimation equation or a similar estimation equation can also be obtained by using a monthly mean maximum temperature Tmax' instead of a daily maximum temperature Tmax in Equation (22) above. This method allows for a simpler estimation process with little reduction in estimation accuracy, compared to using the daily maximum temperature Tmax. In this case, first, a relational expression such as Equation (25) below can be obtained.

$$\Sigma\{\exp(-qEa/kTmp')\bullet Heff\bullet Day\} = \exp(-qEa/kTeff)\bullet 365\bullet Heff \quad (25)$$

In Equation (25) above, Σ indicates the cumulative sum (total sum) of values for each of the 12 months throughout the year. Day corresponds to 31 [days] for January, March, May, July, August, October, and December; 30 [days] for April, June, September, and November; and 28 [days] for February.

In Equation (25) above, Tmp' is the monthly mean maximum temperature of the PV module in units of [K] throughout the year and can be obtained from Equation (26) below.

$$Tmp' = Tmax' + \Delta T \quad (26)$$

In Equation (26) above, Tmax' is the monthly mean maximum temperature in units of [K] throughout the year. For Tmax', air temperature information related to the installation location of the PV module can be used if such information is available from the air temperature information published by the Japan Meteorological Agency or the like. If air temperature information at the installation location of the PV module is unavailable, air temperature information at a location close to the installation location of the PV module can be used.

Solving Equation (25) above for Teff can yield Equation (27) below.

$$\begin{aligned} Teff &= (-qEa/k)/\ln[\Sigma\{\exp(-qEa/kTmp')\bullet Heff\bullet Day\}/(Heff\bullet 365)] \\ &= (-qEa/k)/\ln[\Sigma\{\exp(-qEa/kTmp')\bullet Day\}/365] \quad (27) \end{aligned}$$

If the annual effective temperature Teff expressed by Equation (27) above is used, the annual change in acetic acid concentration over time in the EVA of the PV module can be estimated by Equation (28) below.

$$A(Y) = A0\bullet\exp(B0\bullet\exp(-qEa/kTeff)\bullet Heff\bullet 365\bullet Y) \quad (28)$$

<When Using Annual Mean of Daily Maximum Temperatures>

The applicant confirmed from previous studies that the annual effective temperature Teff has the relationship indicated in Equation (29) below.

$$Teff \approx Tmax\ annual\ mean + \Delta T \quad (29)$$

In Equation (29) above, the Tmax annual mean is an annual mean of the daily maximum temperature Tmax. The annual mean of Tmax may be the mean of the daily maximum temperatures in the field taken daily for one year, or the mean of the monthly maximum temperatures in the field taken monthly for one year. If the annual effective temperature Teff expressed by Equation (29) above is used, the annual change in acetic acid concentration over time in the EVA of the PV module can be estimated by Equation (30) below.

$$A(Y) = A0\bullet\exp(B0\bullet\exp(-qEa/kTeff)\bullet Heff\bullet 365\bullet Y) \quad (30)$$

<About Effective Stress Duration>

Next, calculation of the daily effective stress duration Heff will be described. This may be considered to correspond to the process performed in Step S5 illustrated in FIG. 4. In this case, the daily effective stress duration Heff indicates a daily effective stress duration that remains at a constant value throughout the year. In contrast, the daily effective stress duration, which varies daily throughout the year, can be considered and this will be referred to as heff. In the following, heff is described and then Heff is described.

<About Daily Effective Stress Duration heff>

First, the daily effective stress duration heff will be described. A daily thermal stress can be expressed by Equation (31) below.

$$\Sigma\exp(-qEa/kT) = \exp(-qEa/kTmp)\bullet heff \quad (31)$$

where qEa means q $\times$ Ea, and kTmp means k $\times$ Tmp.

In Equation (31) above, on the left-hand side, the summation is performed over 24 hours in 1-hour intervals. In this manner, the daily effective stress duration heff may be set to a value obtained by dividing $\Sigma$exp(-qEa/kT) by exp(-qEa/kTmp). In this case, $\Sigma$exp(-qEa/kT) is the total sum expressed in units of a predetermined time for an amount in proportion to daily stress due to damp heat in the PV module installed in the field. Moreover, exp(-qEa/kTmp) is an amount in proportion to the stress due to damp heat per unit time at the maximum temperature of the PV module installed in the field. Tmp and heff are values that can vary from day to day.

<About Daily Effective Stress Duration Heff Remaining at Constant Value Throughout Year>

Next, a method for using the daily effective stress duration Heff remaining at the constant value (a typical value) throughout the year, instead of the daily effective stress duration heff that varies from day to day throughout the year, will be described. As in Equation (32) below, heff and Heff are related to each other.

$$\Sigma\{\exp(-qEa/kTmp)\cdot heff\} = \exp(-qEa/kTeff)\cdot Heff\cdot 365 \quad (32)$$

In Equation (32) above, Σ is the cumulative sum (total sum) of values for each of the 365 days throughout the year.

The applicant confirmed from previous studies that Heff = 4.0 [h] ± 0.4 [h] can be used as a guide for the daily effective stress duration Heff for general purpose use throughout the year. More preferably, when the annual mean temperature of the daily maximum temperature Tmax is denoted as "Tmax annual mean", Heff [h] can be 0.108 × Tmax annual mean [°C] + 1.7. More preferably, Heff [h] can be $-0.00248 \times (\text{Tmax annual mean [°C]})^2 + 0.245 \times$ Tmax annual mean [°C]. If the module temperature in the field is available, Heff can be an annual median of the daily effective stress duration heff, which varies from day to day throughout the year.

FIG. 12 illustrates the estimated values for acetic acid concentration obtained as described above (indicated by the dashed line) and the measurement values for the acetic acid concentration of the PV module installed in the field (indicated by the black circles (•)). That is, FIG. 12 is a diagram illustrating a relationship between the number of years a PV module has been installed in the field and the acetic acid concentration in the encapsulant of that PV module. FIG. 12 illustrates that they are in relatively good agreement.

<Acetic Acid Concentration When Reaching End of Lifetime of PV Module>

Next, as illustrated in Step S6 of FIG. 4, the controller 10 of the electronic device 1 acquires acetic acid concentration information $A_T$ at the point in time at which the PV module whose lifetime is to be estimated reaches the end of the lifetime (hereinafter also described as "acetic acid concentration $A_T$ at the end of the lifetime" or "end-of-life acetic acid concentration $A_T$").

As the acetic acid corrosion of the electrodes 170 and/or the contact units 180 of the PV module progresses, the electrical continuity between the electrodes and the semiconductor silicon deteriorates and the contact resistance between the electrodes and the semiconductor increases. An increase in contact resistance inhibits the operation of extracting carriers generated due to the photoelectric conversion effect in the semiconductor silicon to the electrodes, thereby reducing the output of the PV module. The output of a PV module is known to be determined by three pieces of information: a short circuit current Isc, an open-circuit voltage Voc, and a fill factor FF. The increase in contact resistance appears as a decrease in FF characteristics, among other things.

The applicant studied a correlation between acetic acid concentration and FF characteristics and found the correlation as illustrated in FIG. 13. FIG. 13 is a graph illustrating the relationship between acetic acid concentration and FF change rate (degradation rate) for PV modules that have undergone the damp-heat test (damp-heat test specimens) and PV modules retrieved from the field (market-retrieved products).

As illustrated in FIG. 13, the rapid degradation of the FF characteristics can be confirmed once the acetic acid concentration becomes a certain level or higher. Multiple degradation modes associated with the lifetime of a PV module are present. Among them, the rapid degradation of FF characteristics due to electrode corrosion caused by acetic acid (lifetime degradation due to damp-heat stress) is an extremely important degradation mode that determines the upper limit of the lifetime of a PV module. In this case, an FF characteristic degradation rate of 10% is used as a guide for damp-heat degradation lifetime, and the acetic acid concentration at this time is described as acetic acid concentration $A_T$ at the end of the lifetime. As for the range of the acetic acid concentration $A_T$ at the end of the lifetime, a range of about that expressed by Equation (33) below is assumed to be reasonable.

$$\text{End-of-life acetic acid concentration } A_T \approx 3 \times 10^{18} \text{ to } 3 \times 10^{19} \ [/cm^3] \quad (33)$$

The acetic acid concentration $A_T$ at the end of the lifetime may be given by conducting a damp-heat test on a target PV module until the end of the lifetime and measuring the acetic acid concentration information $A_T$ at a point in time at which the PV module reaches the end of the lifetime.

In this case, the end-of-life acetic acid concentration $A_T$ can vary depending on the specifications of the PV module. That is, the end-of-life acetic acid concentration $A_T$ may be set to an appropriate value in accordance with the specifications of the electrodes of solar battery cells in the PV module (composition, electrode width, electrode thickness, firing conditions, and the like) and/or the specifications of the encapsulant in the PV module (main material, additive, thickness, and the like). In this case, the end-of-life acetic acid concentration $A_T$ is not limited to the range of Equation (33) above, but may be assigned upper and lower limits according to the specifications of the PV module. Specifically, a damp-heat test and/or a combined UV/damp-heat test (for example, a combined sequential UV/damp-heat test for when a damp-heat test is performed after a UV test) may be performed for each PV module specification. A graph as illustrated in FIG. 13 may then be created for each PV module specification to determine an appropriate end-of-life acetic acid concentration $A_T$ (a new range that replaces the range expressed by Equation (33)).

<Calculation of Lifetime of PV Module (in Years)>

Next, as illustrated in Step S7 of FIG. 4, the controller 10 of the electronic device 1 calculates, based on damp-heat degradation of the PV module whose lifetime is to be estimated, the number of years (lifetime $Y_T$ (in years)) until the end of the lifetime of the PV module.

Following the above, the number of years until the end of the lifetime of the PV module based on damp-heat degradation (hereinafter also simply referred to as lifetime $Y_T$ (in years)) has a relationship as expressed by Equation (34) below with the above-described acetic acid concentration $A_T$ at the end of the lifetime.

$$A_T = A0 \bullet \exp(B0 \bullet \exp(-qEa/kTeff) \bullet Heff \bullet 365 \bullet Y_T) \quad (34)$$

In this case, A0 represents the acetic acid concentration in the EVA of the PV module at a predetermined point in time. $Y_1$ indicates the number of years (unit: [Y (years)]) until the end of the lifetime of the PV module when the point in time at which the acetic acid concentration in the EVA of the PV module was A0 is set to time zero. Moreover, $1.6 \times 10^7$ can be used for BO, as in the case of Equation (17) above.

Solving Equation (34) above for $Y_T$ yields Equation (35) below.

$$Y_T = \ln(A_T/A0)/\{B0 \bullet \exp(-qEa/kTeff) \bullet Heff \bullet 365\} \quad (35)$$

In this case, considering that the acetic acid concentration $A_T$ at the end of the lifetime can have a distribution width of about $3 \times 10^{18}$ to $3 \times 10^{19}$ [/cm$^3$], the lifetime $Y_T$ (in years) can also be assigned a distribution width. Specifically, the value of the lifetime $Y_T$ (in years) obtained when the acetic acid concentration $A_T$ at the end of the lifetime is set to $3 \times 10^{18}$ can be a lower limit guide for the lifetime $Y_T$ (in years). Moreover, the value of the lifetime (in years) $Y_T$ obtained when the acetic acid concentration $A_T$ at the end of the lifetime is set to $3 \times 10^{19}$ can be an upper limit guide for the lifetime $Y_T$ (in years).

FIG. 14 is a graph illustrating the lifetime $Y_T$ (in years) obtained using Equation (35) above, together with the actual lifetimes of PV modules (in years), the PV modules being installed in the field (market-installed products). In FIG. 14, the upper limit of the lifetime $Y_T$ (in years) obtained using Equation (35) above is indicated by a dot-and-dash line (estimated remaining lifetime (upper limit)). In FIG. 14, the lower limit of the lifetime $Y_T$ (in years) obtained using Equation (35) above is indicated by a broken line (estimated remaining lifetime (lower limit)). In FIG. 14, the market-installed products are indicated by black circles (•).

In FIG. 14, the lifetime $Y_T$ (in years) is calculated using the point in time at which each PV module is installed in the field as the zero point in time. FIG. 14 illustrates a lower limit of the lifetime $Y_T$ (in years) assumed and calculated with $3 \times 10^{18}$ [/cm$^3$] as the acetic acid concentration $A_T$ at the end of the lifetime and an upper limit of the lifetime $Y_T$ (in years) assumed and calculated with $3 \times 10^{19}$ [/cm$^3$] as the acetic acid concentration $A_T$ at the end of the lifetime. As illustrated in FIG. 14, the actual lifetime of the PV module (in years) lies between the lower and upper limits of the estimated lifetime (in years), and the validity of the lifetime $Y_T$ (in years) based on Equation (35) can be confirmed.

<Humidity Correction and UV Correction in Lifetime Estimation>

As described above, the lifetime $Y_T$ (in years) can be obtained. This lifetime $Y_T$ (in years) can be regarded as a lifetime (in years) serving as a guide before considering humidity correction (humidity dependence of the period until the end of the lifetime due to damp heat) and UV correction (UV light dependence of the period until the end of the lifetime due to damp heat). If the risk of degradation up to about the end of the lifetime of a target PV module in the future is to be evaluated, even the lifetime (in years) serving as a guide can be said to be sufficiently useful information as illustrated in FIG. 14. In contrast, if the lifetime of a target PV module is desired to be obtained in years more accurately, the humidity and UV corrections described below may be taken into consideration.

When humidity correction and UV correction are to be performed, the controller 10 of the electronic device 1 may calculate a humidity correction factor as illustrated in Step S8 of FIG. 4, and a UV correction factor as illustrated in Step S9. In this manner, the controller 10 can calculate, as illustrated in Step S10, the lifetime $Y_T$ (in years) into which humidity correction and UV correction are taken into account, that is, the lifetime (in years) based on degradation due to UV and damp heat in the installed field.

In the humidity correction in this case, B0 is corrected in Equations (34) and (35) above. Moreover, in the UV correction, A0 is corrected in Equations (34) and (35) above. Specifically, if the humidity correction factor is denoted as βH and the UV correction factor is denoted as βU, Equations (34) and (35) above can be expressed by Equations (36) and (37) below.

$$A_T = (A0 \bullet \beta U) \bullet \exp((B0 \bullet \beta H) \bullet \exp(-qEa/kTeff) \bullet Heff \bullet 365 \bullet Y_T) \quad (36)$$

$$Y_T = \ln(A_T/(A0 \bullet \beta U))/\{(B0 \bullet \beta H) \bullet \exp(-qEa/kTeff) \bullet Heff \bullet 365\} \quad (37)$$

In Equations (36) and (37) above, the humidity correction factor βH can be assigned in the range of about 0.5 to 1, and the UV correction factor βU in the range of 1 to about 20. In the following, each of the humidity correction factor and the UV correction factor is further described.

<About Humidity Correction Factor>

The humidity correction factor βH is a parameter to account for the humidity dependence of B0. As a result of multiplying $1.6 \times 10^7$, which is the value of B0 obtained from the above-described high-temperature high-humidity test, by the humidity correction factor βH, this parameter accounts for moisture concentration [$H_2O$] in the EVA installed in an actual field (under a humidity condition in the field). The humidity correction factor βH can be assigned in the range of about 0.5 to 1, as described above. The moisture concentration [$H_2O$] in the EVA is not simply proportional to the humidity of the outside air (atmosphere), as described above, but also depends on the moisture retention capacity (moisture adsorption performance) of the EVA. Thus, the moisture concentration [$H_2O$] in the EVA may be information that is to be determined experimentally. Therefore, the humidity correction factor βH may also be a factor that is to be determined experimentally.

The applicant confirmed through experiments conducted so far that the lifetime of each PV module based on damp-heat degradation is dependent on relative humidity. The applicant also confirmed that the relative humidity at the temperature of the PV module is given by considering information regarding the relative humidity of the atmosphere in the actual field environment and information regarding the temperature of the PV module installed at that location. The damp-heat lifetime of the PV module in the actual field was then confirmed to be obtained through the following procedure.

That is, first, the Arrhenius equation is applied to the damp-heat lifetime of the PV module in the high-temperature high-humidity test. This determines the damp-heat lifetime under a high humidity condition at the actual field temperature (the same relative humidity condition as in the high-temperature high-humidity test). A predetermined humidity correction factor (determined based on relative humidity information at the temperature of the PV module in the actual field environment) is then applied to the damp-heat lifetime under this high humidity condition. This allows acquisition of the damp-heat lifetime of the PV module in the actual field environment.

In this case, the applicant has derived from the results of the damp-heat test using the relative humidity condition as a variable that a maximum value of around 2 is reasonable as the humidity correction factor in lifetime estimation. The humidity correction factor in the lifetime estimation is inversely related to βH, which is the correction factor for the coefficient B0 for acetic acid formation reaction. From the above, as the humidity correction factor βH, a value in the above-described range of about 0.5 to 1 was obtained.

The specific value to be adopted within the above-described range as the humidity correction factor βH in the PV module installed in the actual field may be determined comprehensively from the accumulation of predetermined information. In this case, the PV module installed in the field may be retrieved, and the predetermined information may be, for example, an analytical value of the moisture concentration in the EVA of the PV module. The predetermined information may be the remaining time until the end of the lifetime (lifetime period) obtained by performing an additional damp-heat test on the PV module installed in the field. If the information necessary or sufficient to make a comprehensive determination is determined to be insufficient, a value as close to 1 as possible may be adopted as the humidity correction factor βH. This corresponds to a relatively strict estimate, which is a short estimate, of the lifetime of the PV module (in years). Such estimation allows the user to prioritize a safer choice when the user makes a decision based on the lifetime of the PV module (in years) over a choice that includes a risk associated with the PV module whose lifetime is estimated longer (in years). The degree to which the humidity correction factor βH is set close to 1 may be determined based on the risk policy of the entity determining the lifetime of the PV module (in years). In regions where humidity is relatively high throughout the year, for example, particularly in the southern regions of Japan and in Southeast Asia, for example, a value close to 1 can be adopted as the humidity correction factor βH.

<About UV Correction Factor>

The UV correction factor βU is a parameter that takes into account the phenomenon of acetic acid formation involving an additive in the EVA when UV light is present. A typical example of an additive involved in the formation of acetic acid under UV light stress is a UV absorber, UVA. The UV correction factor βU may be determined by considering the UV light transmission characteristics of the glass located at the incident surface of the PV module, the presence or absence and concentration of an additive contained in the EVA, and the installation period of the PV module (in years). In this case, the maximum value of the UV correction factor βU can be obtained as follows. That is, first, the acetic acid concentration that has almost reached its saturation value (for example, about $2 \times 10^{18}/cm^3$) is obtained, the acetic acid concentration being formed when the PV module is subjected to a UV irradiation test after manufacture and before installation in the field. In this case, the cumulative irradiation energy of UV light in the UV irradiation test may be set to about 300 $kWh/m^2$, based on the situation where the PV module has been installed in the field for about three years. Next, the acetic acid concentration obtained in this manner is divided by the acetic acid concentration obtained before being subjected to the UV irradiation test (for example, about 1 to $2 \times 10^{17}/cm^3$), so that the maximum value of the UV correction factor βU can be obtained. The maximum value of the UV correction factor βU can also be obtained by dividing the acetic acid concentration of the PV module that has been installed in the field for three years or more (for example, about $2 \times 10^{18}/cm^3$) by the acetic acid concentration obtained before installation in the field (for example, about 1 to $2 \times 10^{17}/cm^3$). From the above, the UV correction factor βU can be assigned in the range of 1 to about 20, as described above.

The following is a description of the way in which the UV correction factor βU is assigned in several cases.

First, if the glass located at the incident surface of the PV module is glass that transmits almost no UV light (UV-cut glass), the UV correction factor βU may be assigned a value close to 1. This is because, in the case of UV-cut glass, even if an additive such as the UV absorber UVA is contained in the EVA, UV light hardly reaches the inside of the EVA. Thus, additive-induced acetic acid formation involving UV light hardly occurs.

Next, if the glass located at the incident surface of the PV module is UV light-transmitting glass (UV-permeable glass) and the installation period (in years) is about 3 years or more, the UV correction factor βU may be assigned a value close to 1, irrespective of the presence of additives such as UVA. This is because, even with the addition of additives such as the UV absorber UVA, the reaction for forming acetic acid due to these additives and UV light rarely occurs by the time the PV module has been installed for about three years. Specifically, this is because additives such as the UV absorber UVA decompose and combine with other molecules due to UV light stress within about three years since installation, and their concentrations rapidly decrease, inversely proportional to the formation of acetic acid.

Next, if the glass located at the incident surface of the PV module is UV-permeable glass and contains additives such as the UV absorber UVA in the EVA, and the PV module has been installed for less than about three years, the UV correction factor βU may have a range of 1 or greater, up to about 20. For example, as the installation period of the PV module (in years) decreases, the UV correction factor βU may have a value close to 20. As the installation period of the PV module (in years) is closer to about three years, the UV correction factor βU may have a value close to 1.

More specifically, the UV correction factor βU may be given according to the amount of additive added. For example, if UVA is added, βU may be given by Equation (38) below, where the amount of UVA added is denoted as U1 and the acetic acid concentration in the EVA is A0.

$$\beta U = 1 \text{ to } U1/A0 \quad (38)$$

If UVA is not added, βU may be given by Equation (39) below, where the acetic acid concentration in the EVA when it reaches near saturation in the UV irradiation test is denoted as U2.

$$\beta U = 1 \text{ to } U2/A0 \quad (39)$$

<Case of Estimating Remaining Lifetime Using Raman Measurement Information>

Subsequently, a case will be described in which the remaining lifetime of a PV module is estimated using Raman measurement information (Raman signal intensity).

First, a case will be described in which the glass located at the incident surface of the PV module is glass that transmits almost no UV light (UV-cut glass). In this case, the relationship between Raman signal intensity ratio and acetic acid concentration is as illustrated in FIG. 6. The acetic acid concentration in the EVA can be obtained from the Raman signal intensity ratio. This is because, in the case of UV-cut glass, even if an additive such as the UV absorber UVA is contained in the EVA, UV light hardly reaches the inside of the EVA. Thus, additive-induced acetic acid formation hardly occurs.

Next, a case will be described in which the glass located at the incident surface of the PV module is UV light-transmitting glass (UV-permeable glass). In this case, the relationship between Raman signal intensity ratio and acetic acid concentration can be significantly different from the correlation illustrated in FIG. 6. That is, a case can arise where the correlation has a different slope from the correlation illustrated in FIG. 6. Specifically, as a correlation between Raman signal intensity ratio and acetic acid concentration, the correlation as illustrated in FIG. 15 may be obtained, for example. In such a case, a correction factor $\gamma$ may be introduced to correctly obtain the acetic acid concentration in the EVA from the Raman signal intensity ratio. That is, if the correlation illustrated in FIG. 6 is expressed by Equation (40) below, the correlation whose slope is significantly different from the correlation in FIG. 6 (for example, the correlation as illustrated in FIG. 15) can be given by Equation (41) below using $\gamma$.

$$\log(\text{acetic acid concentration } [\mu g/g]) = C1 \times \text{Raman signal intensity ratio} + C2 \quad (40)$$

$$\log(\text{acetic acid concentration } [\mu g/g]) = \gamma \bullet C1 \times \text{Raman signal intensity ratio} + C2 \quad (41)$$

C1 in Equation (40) above represents the slope of the approximate equation that fits the experimental data in the graph of [log(acetic acid concentration) - Raman signal intensity ratio] illustrated in FIG. 6. C2 in Equation (40) above represents the intercept of the approximate equation that fits the experimental data in the graph of [log(acetic acid concentration) - Raman signal intensity ratio], also illustrated in FIG. 6. In addition, $\gamma$ in Equation (41) above is a correction factor that corrects C1 (namely, replaces the slope with $\gamma$•C1), which gives the slope of the approximate equation that fits the experimental data illustrated in FIG. 6. By introducing the correction factor $\gamma$, an approximate equation can be obtained that fits the experimental data, for example, as illustrated in FIG. 15. The value of $\gamma$ can be in the range of 0.2 to 1.0. For example, in the examples in FIGs. 6 and 15, C1 can be 3.12 $\pm$ about 0.03, C2 1.41 $\pm$ about 0.02, and $\gamma$ 0.23 $\pm$ about 0.04.

If the glass located at the incident surface of the PV module is UV light-transmitting glass (UV-permeable glass), the absolute value of the Raman signal intensity may be significantly large and the Raman signal intensity ratio may look like that illustrated in FIG. 16, for example. This phenomenon is noticeable especially when the UV absorber UVA is added. In this case, the Raman signal intensity ratio is obtained by normalizing a predetermined Raman signal intensity by the Raman signal intensity due to CH near the Raman shift of 2800 $cm^{-1}$. The following is a description of a method for obtaining the remaining lifetime of a PV module (in years) when the Raman signal intensity ratio as illustrated in FIG. 16 is obtained.

First, a case will be described in which the installation period (Y0 years) of the PV module (in years) is about three years or more (a case where about three years < YO years). If the installation period of the PV module (in years) is about three years or more, the concentration of additives such as the UV absorber UVA has already significantly decreased, as described above. Thus, the formation of acetic acid induced by these additives is negligible thereafter. Thus, if the waveform of the Raman spectrum as illustrated in FIG. 16 is observed for the PV module whose installation period (in years) is about three years or more, the acetic acid concentration induced by these additives may be considered to have saturated at a point in time about three years after installation. That is, if a reference time (year zero) is set to a point in time at which the installation period of the PV module (in years) is about three years, the acetic acid concentration $A_T$ at and after that reference time and/or the number of years $Y_T$ until the end of the lifetime (remaining lifetime in years) may be obtained using Equations (36) and (37). In this case, 1 may be used as the value of $\beta$U, and 1 to 2 $\times$ $10^{18}$ may be used as a guide value for A0 at the reference time. Alternatively, 1 may be used as the value of $\beta$U, and U1 or U2 described above may be used as a guide value for A0 at the reference time. From the above, the number of years until the end of the lifetime at the time of Y0 years (remaining lifetime in years) is assigned $Y_T$ + (3 - YO).

Next, a case will be described in which the installation period (Y0 years) of the PV module (in years) is less than about three years (Y0 years < about three years) at that point in time. If the installation period of the PV module (in years) is less than about three years at that point in time, the concentration of additives such as the UV absorber UVA has not yet significantly decreased. However, unless a specific reason for its removal is present, the PV module generally continues to be installed in that location, the installation period (in years) exceeds about three years, and then the PV module remains installed for a further longer period of time. In this manner, if the installation period (in years) is assumed to exceed about three years in the future, the situation will be the same as in the case described above, where the above-described installation period (in years) is about three years or more. That is, if the waveform of the Raman spectrum as illustrated in FIG. 16 is expected to be obtained in the future for the PV module whose installation period (in years) is less than about three years (Y0 years), the remaining lifetime of the PV module may be estimated as follows. That is, if a reference time (year zero) is set to a point in time at which the installation period of the PV module (in years) is about three years, the acetic acid concentration $A_T$ at and after that reference time and/or the number of years $Y_T$ until the end of the lifetime may be obtained using Equations (36) and (37). In this case, 1 may be used as the value of βU, and 1 to 2 × $10^{18}$ may be used as a guide value for A0 at the reference time. Alternatively, 1 may be used as the value of βU, and U1 or U2 described above may be used as a guide value for A0 at the reference time. From the above, the number of years until the end of the lifetime at the time of YO years (remaining lifetime in years) is assigned $Y_T$ + (3 - Y0).

<Relationship Between (Estimated) Lifetime (in Years) Based on Damp-Heat Degradation and Actual Lifetime (in Years)>

The lifetime of a PV module (in years) based on damp-heat degradation (the estimated remaining lifetime (in years)) obtained through the above-described procedure is in a magnitude relationship with the actual lifetime (in years), as expressed by Equation (42) below.

Actual lifetime (in years) ≤ (estimated) lifetime (in years) based on damp-heat degradation (42)

The reason for the relationship expressed by Equation (42) above is not because the actual remaining lifetime (in years) is not only caused by the environmental stresses of temperature, humidity, and UV light, but caused by all environmental stresses such as temperature cycle stress and/or potential difference stress. In this case, the potential difference stress is the stress caused by the potential difference between the PV module and the ground potential. Thus, the lifetime (in years) based on damp-heat degradation obtained by the electronic device 1 according to an embodiment may be interpreted as giving the upper limit of the actual lifetime (in years). That is, the lifetime of the PV module (in years) based on damp-heat degradation obtained by the electronic device 1 according to an embodiment is a value that can be obtained with some range depending on the values of the acetic acid concentration, humidity correction factor, and/or UV correction factor and the like set for the end of the lifetime. However, taking into account the magnitude relationship with the above-described actual lifetime (in years), the shorter lifetime (in years) among the lifetimes (in years) obtained with a certain range may be weighted and regarded as the estimated value. Such estimation allows the user to prioritize a safer choice when the user makes a decision based on the lifetime of the PV module (in years) over a choice that includes a risk associated with the PV module whose lifetime is estimated longer (in years).

If the total lifetime of the panel (in years) is denoted as Ytotal, Ytotal can be expressed by Equation (43) below.

$$\text{Ytotal} = \text{installation period (in years)} + \text{remaining lifetime (in years)} = \text{Y0} + \text{Y}_\text{T} \quad (43)$$

Note that the total lifetime Ytotal (in years) in this case is meaningful when no change is present in the installation region/installation configuration before and after the measurement of acetic acid concentration.

<Effects of Electronic Device According to Embodiment>

With the electronic device 1 according to an embodiment, the (remaining) lifetime of a PV module based on damp-heat degradation thereafter can be estimated based on information regarding the acetic acid concentration within the EVA in the PV module. With the electronic device 1 according to an embodiment, when the acetic acid concentration is obtained using Raman measurement, the lifetime (remaining lifetime (in years)) of a target PV module based on damp-heat degradation can be estimated based only on Raman measurement information at a single time. With the electronic device 1 according to an embodiment, even when the installation configuration and/or installation location of a PV module is changed, the post-change lifetime (remaining lifetime (in years)) of the PV module based on damp-heat degradation can be estimated. In this case, if the acetic acid concentration information at the time of the change (or Raman measurement information at the time of the change) is available, the post-change lifetime (remaining lifetime (in years)) of the PV module based on damp-heat degradation can be estimated.

In recent years, a secondary market (a trading market) for PV power plants has been emerging. There, a guaranteed business scheme for used PV modules has also emerged. In such a situation, the issue in trading used PV modules each at a reasonable price is the way in which the current asset value of the used PV module is evaluated, so that the evaluation technology is extremely important. With the electronic device 1 according to an embodiment, the period until the end of the lifetime of the used PV module can be reasonably evaluated. Thus, evaluation of the asset values of used modules using the electronic device 1 according to an embodiment can be an indispensable technology in such a business scheme. With the electronic device 1 according to an embodiment, information regarding the period until the end of the lifetime of each PV module can be provided as highly reliable information in the secondary market for PV power plants.

In recent years, the issue of end-of-life disposing (disposal) of residential PV modules that have already been installed has begun to attract attention. Specifically, issues such as the period until the disposal of each PV module (remaining lifetime (in years)), an inspection method during the period until the disposal thereof, and/or an end-of-life disposal method have begun to attract attention. With the electronic device 1 according to an embodiment, the period until the end of the lifetime of an installed residential PV module can be reasonably evaluated. Thus, evaluation of the remaining lifetime of an installed module using the electronic device 1 according to an embodiment can be an indispensable technology to make an appropriate determination on such an issue. With the electronic device 1 according to an embodiment, information regarding the period until the end of the lifetime (remaining lifetime (in years)) of a residential PV module that has already been installed can be provided as highly reliable information.

With the electronic device 1 according to an embodiment, the period until the end of the lifetime of a PV module that uses EVA, which is commonly adopted as a PV module encapsulant, can be reasonably estimated. In contrast, for a PV module using EVA with an acid acceptor, for example, another parameter besides the various parameters described above may be taken into account to estimate the period until the end of the lifetime.

Although the present disclosure has been described based on the drawings and examples, it should be noted that one skilled in the art can easily make various changes or variations based on the present disclosure. Thus, it should be noted that these changes or variations are included within the scope of the present disclosure. For example, functions included in respective functional units can be rearranged so as not to be logically inconsistent. Multiple functional units and the like may be combined into one or separated. Each of the above-described embodiments according to the present disclosure is not limited to faithful implementation of the described embodiment, but may be implemented by combining the individual features or omitting some of the features, as appropriate. That is, a person skilled in the art can make various changes and variations to the content of the present disclosure based on the present disclosure. Thus, these changes and variations are included within the scope of the present disclosure. For example, in each embodiment, each functional unit, each means, each step, and the like can be added to another embodiment so as not to be logically inconsistent, or can be replaced with each functional unit, each means, each step, and the like of another embodiment. In each embodiment, multiple items among each functional unit, each means, each step, and the like can be combined or separated.

The above-described embodiments are not limited to implementation as an electronic device only. For example, the above-described embodiments may be implemented as a method for controlling a device such as an electronic device. Furthermore, for example, the above-described embodiments may be implemented as a program to be executed by a device or computer, such as an electronic device, or as a storage medium or recording medium containing such a program.

REFERENCE SIGNS

| | |
|---|---|
| 1 | electronic device |
| 10 | controller |
| 20 | input unit |
| 30 | output unit |
| 40 | communication unit |
| 50 | memory unit |

## Claims

**1.** An electronic device configured to generate, based on

first information indicating an acetic acid concentration in an encapsulant of a photovoltaic module at a predetermined point in time,
second information indicating an acetic acid concentration in the encapsulant at an end of a period during which the photovoltaic module is capable of outputting a predetermined electric power, and
third information related to calculation of a change in acetic acid concentration in the encapsulant over time within a use environment of the photovoltaic module,
fourth information regarding a remaining period during which the photovoltaic module is assumed to be capable of outputting the predetermined electric power within the use environment.

**2.** The electronic device according to claim 1, wherein the first information is information acquired without destroying the photovoltaic module.

**3.** The electronic device according to claim 1 or 2, wherein the first information is information acquired based on Raman spectroscopy measurement performed on the encapsulant of the photovoltaic module.

**4.** The electronic device according to claim 3, wherein the first information is information acquired based on Raman spectroscopy measurement performed at the predetermined point in time.

**5.** The electronic device according to claim 1, wherein the first information is information acquired by destroying the photovoltaic module.

**6.** The electronic device according to claim 1 or 5, wherein the first information is information acquired based on ion chromatography analysis performed on the encapsulant of the photovoltaic module.

**7.** The electronic device according to claim 1 or 5, wherein the first information is information acquired based on pH measurement performed on the encapsulant of the photovoltaic module.

**8.** The electronic device according to claim 1, wherein the third information is information indicating temporal evolution of the acetic acid concentration in the encapsulant.

**9.** The electronic device according to claim 1, wherein the fourth information is information regarding a period until a steep decrease in the electric power output by the photovoltaic module within the use environment.

**10.** The electronic device according to claim 1, wherein the fourth information is generated based on the first information, the second information, and the third information and also by taking into account a correction related to humidity to which the photovoltaic module is exposed.

**11.** The electronic device according to claim 1, wherein the fourth information is generated based on the first information, the second information, and the third information and also by taking into account a correction related to ultraviolet light to which the photovoltaic module is exposed.

**12.** An electronic device control method comprising:

acquiring first information indicating an acetic acid concentration in an encapsulant of a photovoltaic module at a predetermined point in time;
acquiring second information indicating an acetic acid concentration in the encapsulant at an end of a period during which the photovoltaic module is capable of outputting a predetermined electric power;
acquiring third information related to calculation of a change in acetic acid concentration in the encapsulant over time within a use environment of the photovoltaic module; and
generating fourth information regarding a remaining period during which the photovoltaic module is assumed to be capable of outputting the predetermined electric power within the use environment, based on the first information, the second information, and the third information.

**13.** A program causing an electronic device to execute:

acquiring first information indicating an acetic acid concentration in an encapsulant of a photovoltaic module at a predetermined point in time;
acquiring second information indicating an acetic acid concentration in the encapsulant at an end of a period during which the photovoltaic module is capable of outputting a predetermined electric power;
acquiring third information related to calculation of a change in acetic acid concentration in the encapsulant over time within a use environment of the photovoltaic module; and
generating fourth information regarding a remaining period during which the photovoltaic module is assumed to be capable of outputting the predetermined electric power within the use environment, based on the first information, the second information, and the third information.

FIG. 1

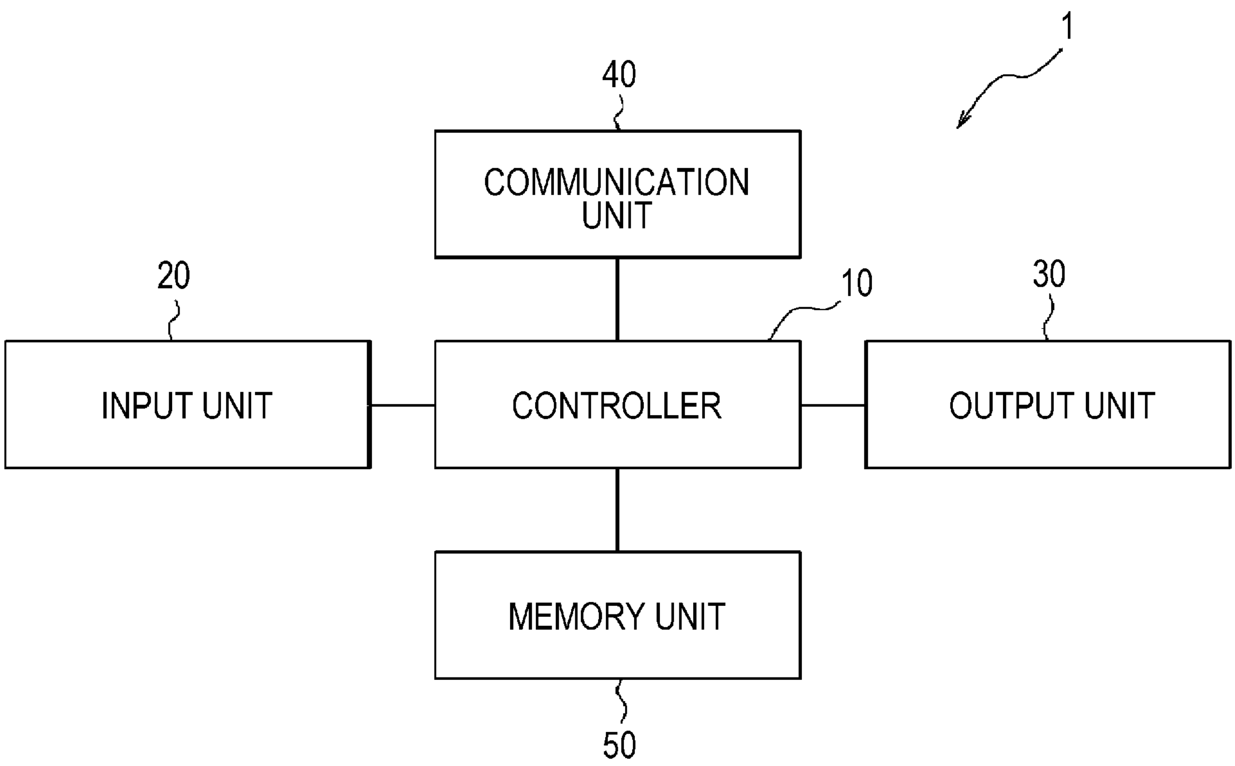
1
40
COMMUNICATION UNIT
20
10
30
INPUT UNIT
CONTROLLER
OUTPUT UNIT
MEMORY UNIT
50

FIG. 2

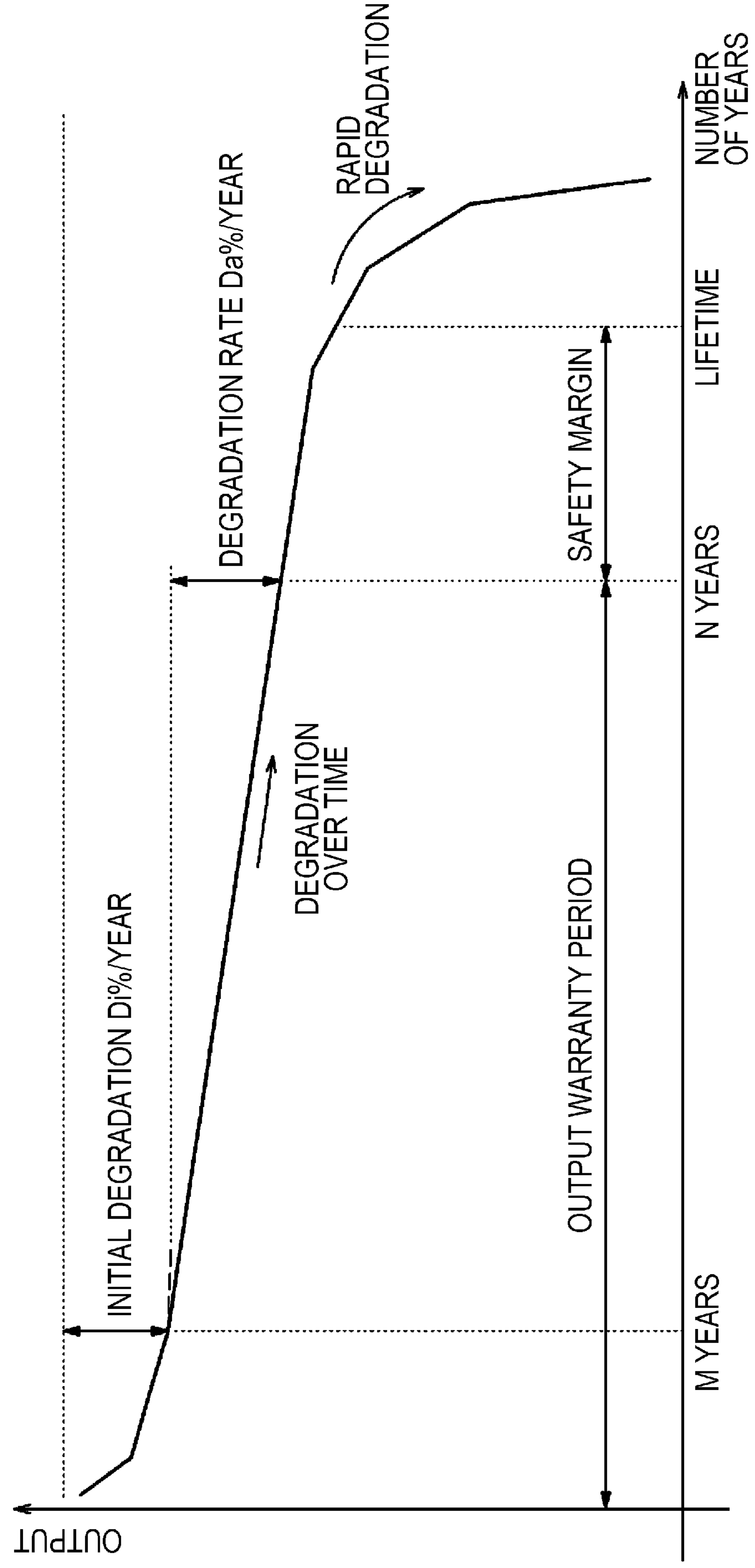
RAPID DEGRADATION
DEGRADATION RATE Da%/YEAR
DEGRADATION OVER TIME
INITIAL DEGRADATION Di%/YEAR
SAFETY MARGIN
OUTPUT WARRANTY PERIOD
OUTPUT
M YEARS
N YEARS
LIFETIME
NUMBER OF YEARS

FIG. 3

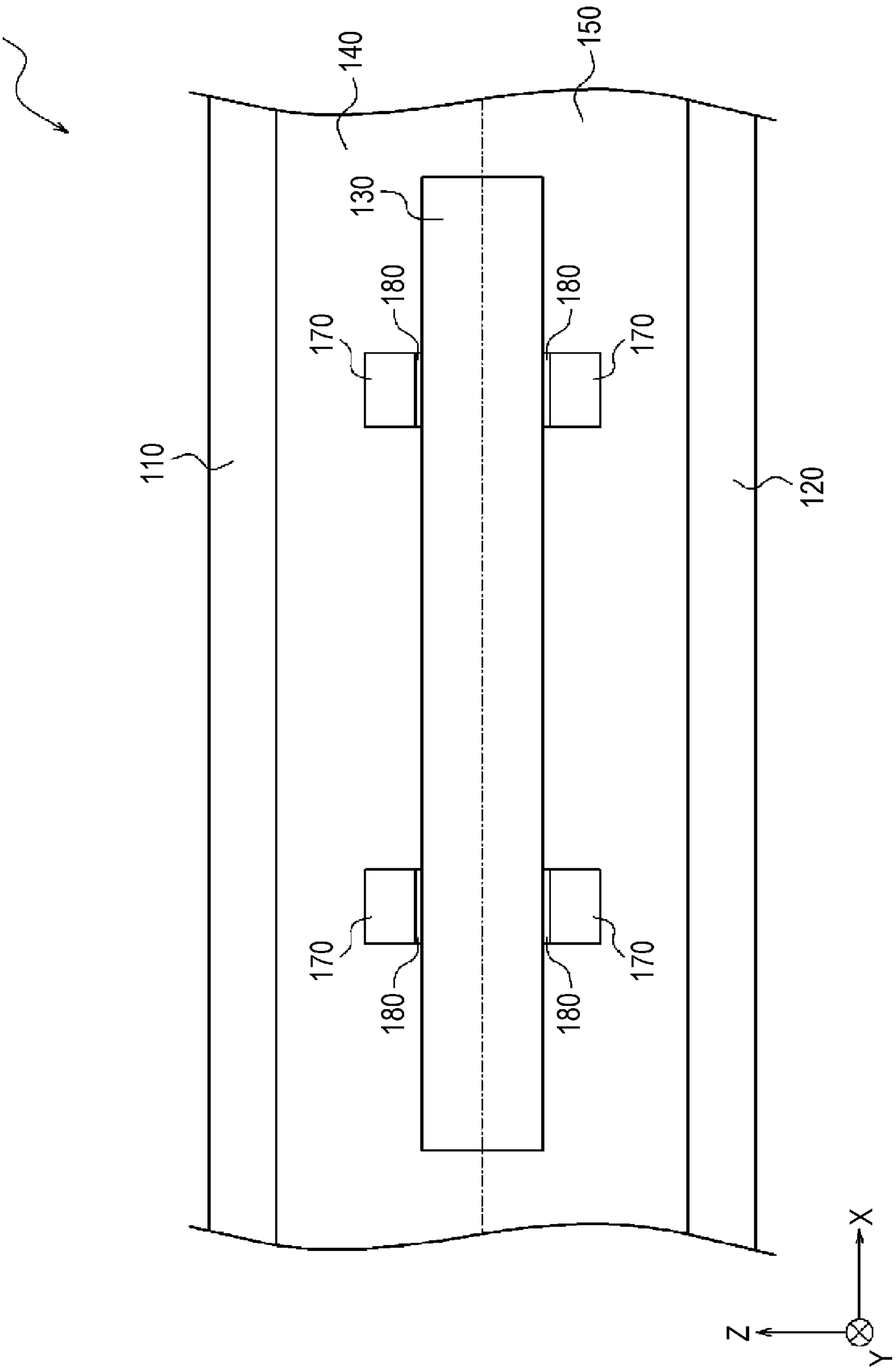

FIG. 4

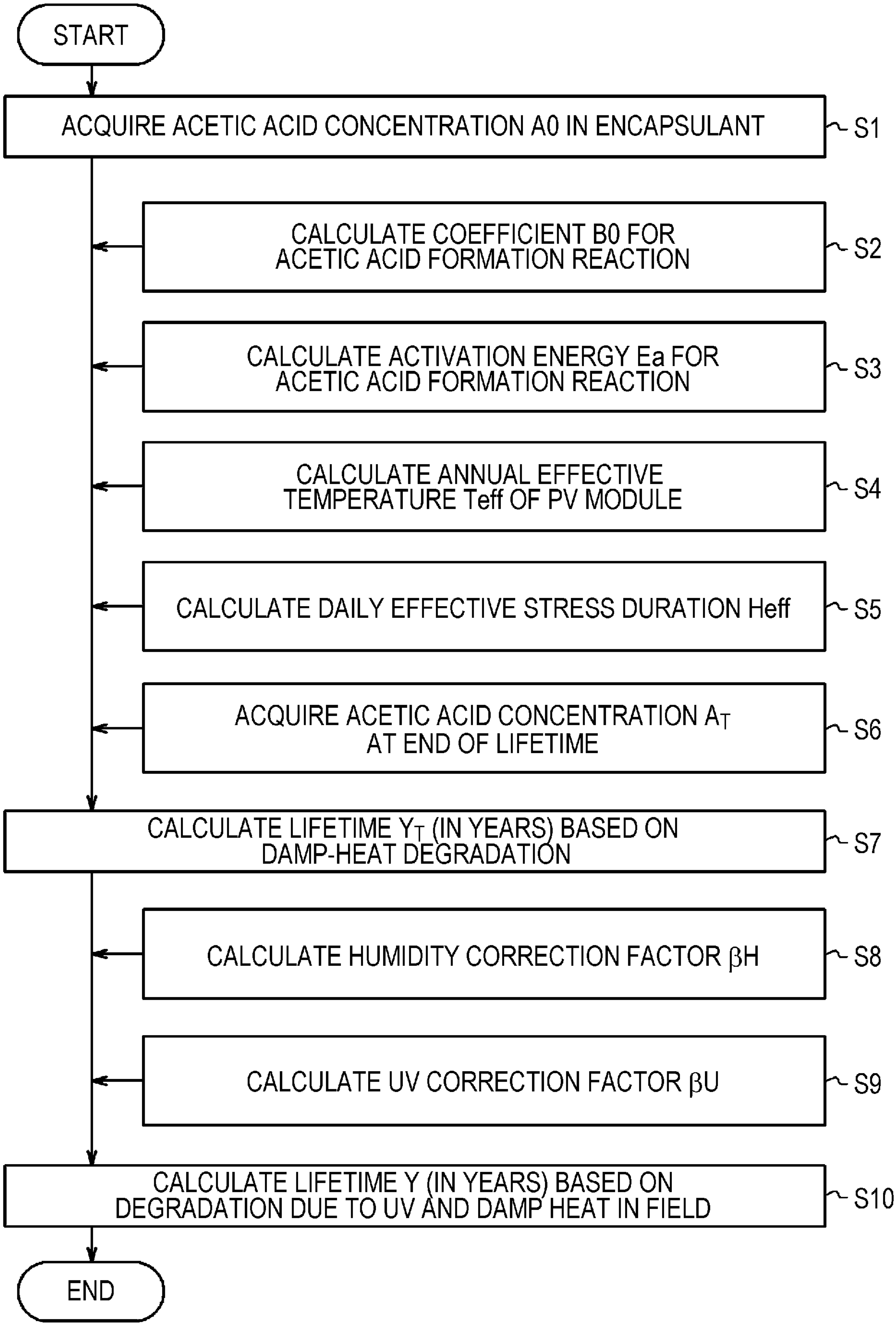
START
ACQUIRE ACETIC ACID CONCENTRATION A0 IN ENCAPSULANT
S1
CALCULATE COEFFICIENT B0 FOR ACETIC ACID FORMATION REACTION
S2
CALCULATE ACTIVATION ENERGY Ea FOR ACETIC ACID FORMATION REACTION
S3
CALCULATE ANNUAL EFFECTIVE TEMPERATURE Teff OF PV MODULE
S4
CALCULATE DAILY EFFECTIVE STRESS DURATION Heff
S5
ACQUIRE ACETIC ACID CONCENTRATION $A_T$ AT END OF LIFETIME
S6
CALCULATE LIFETIME $Y_T$ (IN YEARS) BASED ON DAMP-HEAT DEGRADATION
S7
CALCULATE HUMIDITY CORRECTION FACTOR βH
S8
CALCULATE UV CORRECTION FACTOR βU
S9
CALCULATE LIFETIME Y (IN YEARS) BASED ON DEGRADATION DUE TO UV AND DAMP HEAT IN FIELD
S10
END

FIG. 5

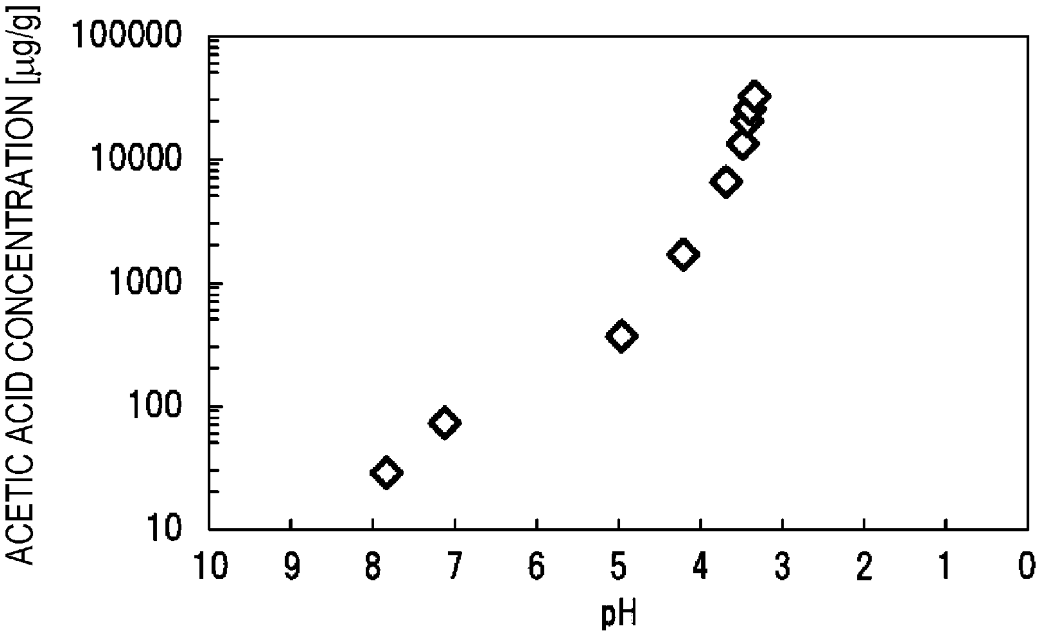
ACETIC ACID CONCENTRATION [μg/g]
100000
10000
1000
100
10
10 9 8 7 6 5 4 3 2 1 0
pH

FIG. 6

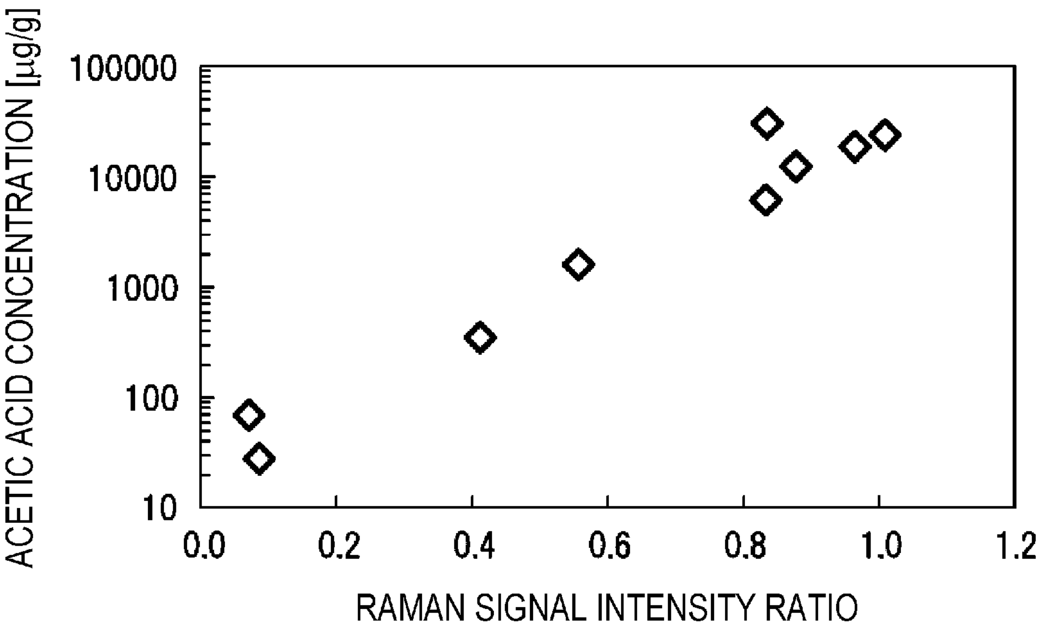
ACETIC ACID CONCENTRATION [μg/g]
100000
10000
1000
100
10
0.0 0.2 0.4 0.6 0.8 1.0 1.2
RAMAN SIGNAL INTENSITY RATIO

FIG. 7

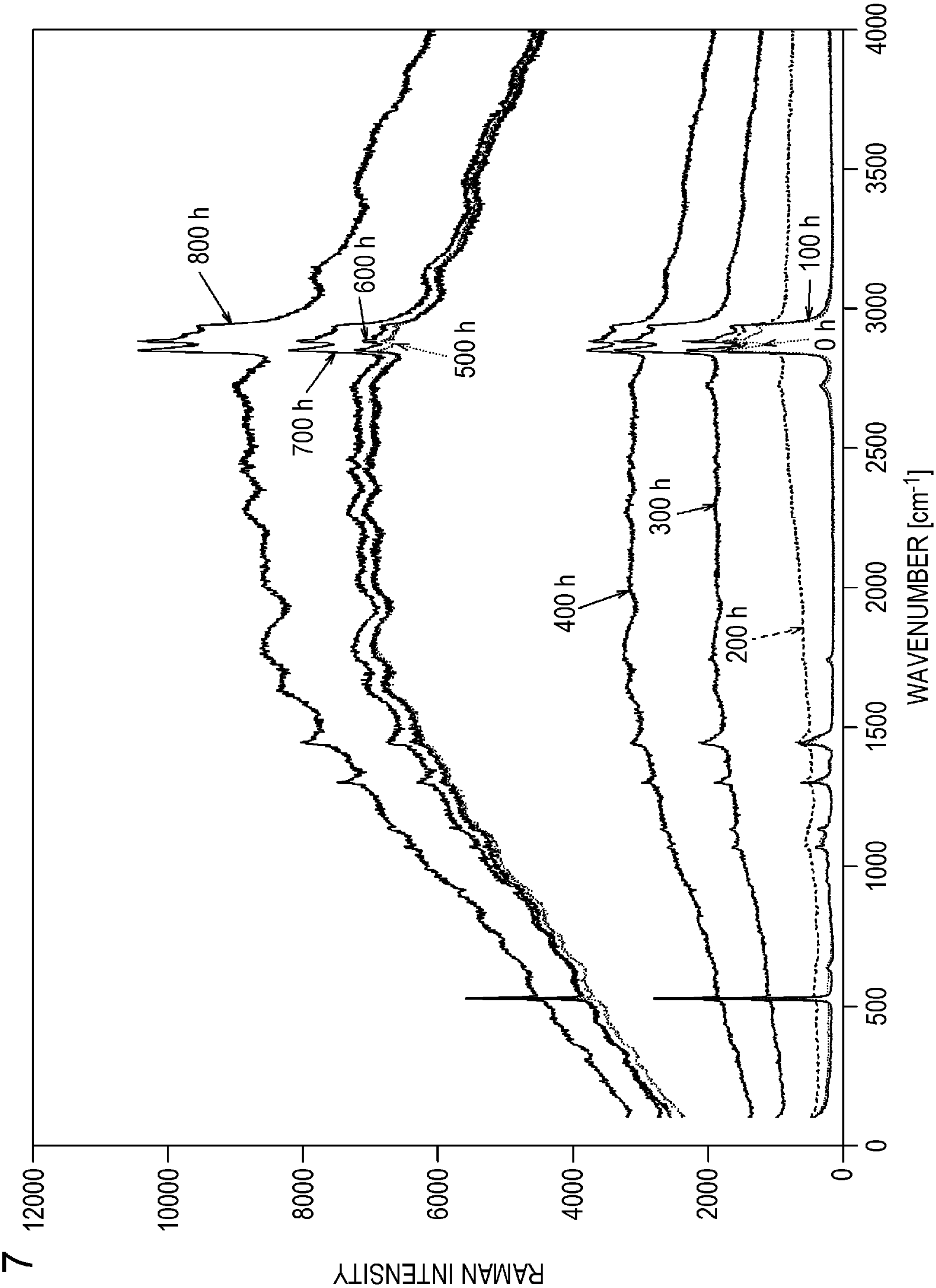
RAMAN INTENSITY
WAVENUMBER [cm-1]
0
2000
4000
6000
8000
10000
12000
0
500
1000
1500
2000
2500
3000
3500
4000
800 h
700 h
600 h
500 h
400 h
300 h
200 h
100 h
0 h

FIG. 8

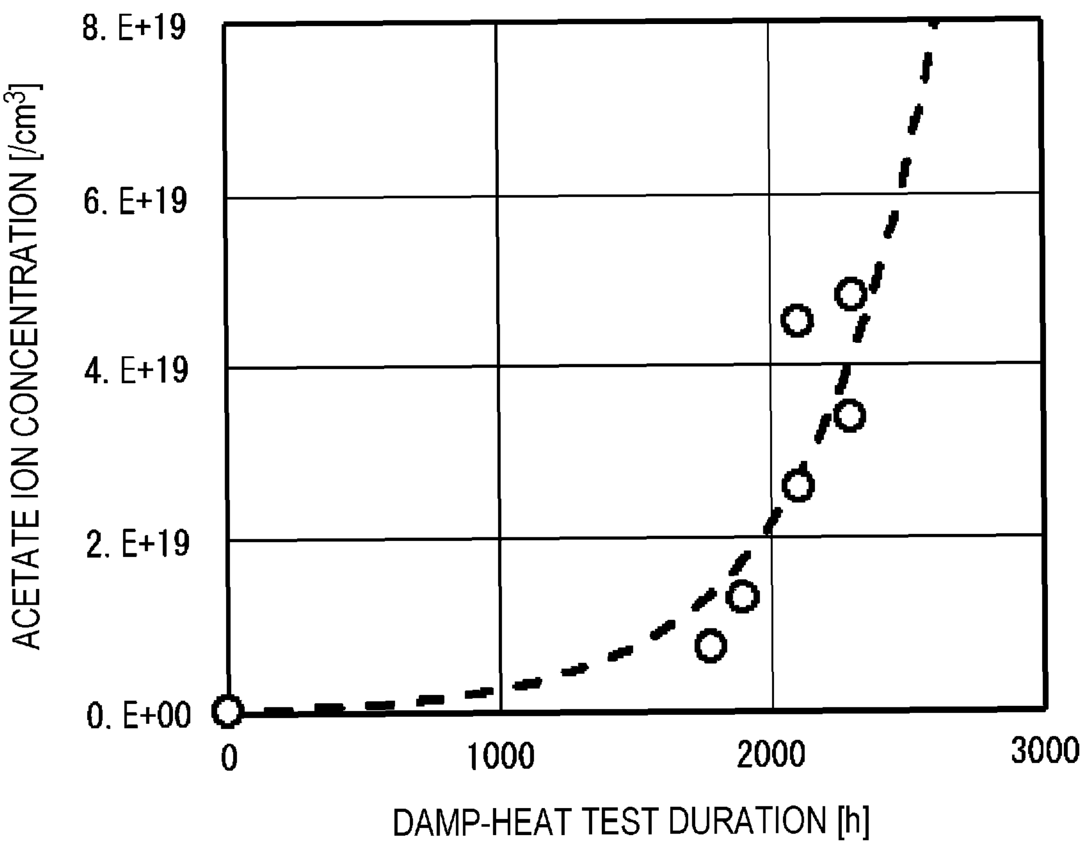
8. E+19
6. E+19
4. E+19
2. E+19
0. E+00
ACETATE ION CONCENTRATION [/cm3]
0
1000
2000
3000
DAMP-HEAT TEST DURATION [h]

FIG. 9

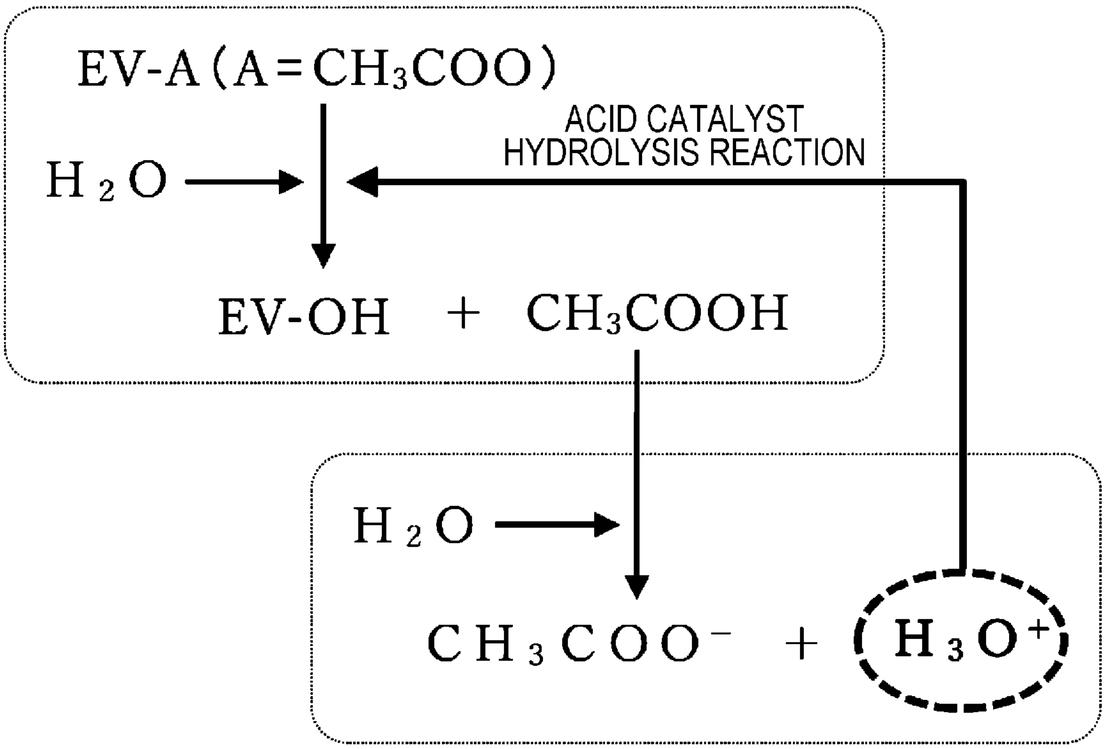
EV-A (A = $CH_3COO$)
$H_2O$
ACID CATALYST
HYDROLYSIS REACTION
EV-OH + $CH_3COOH$
$H_2O$
$CH_3COO^-$ + $H_3O^+$

FIG. 10

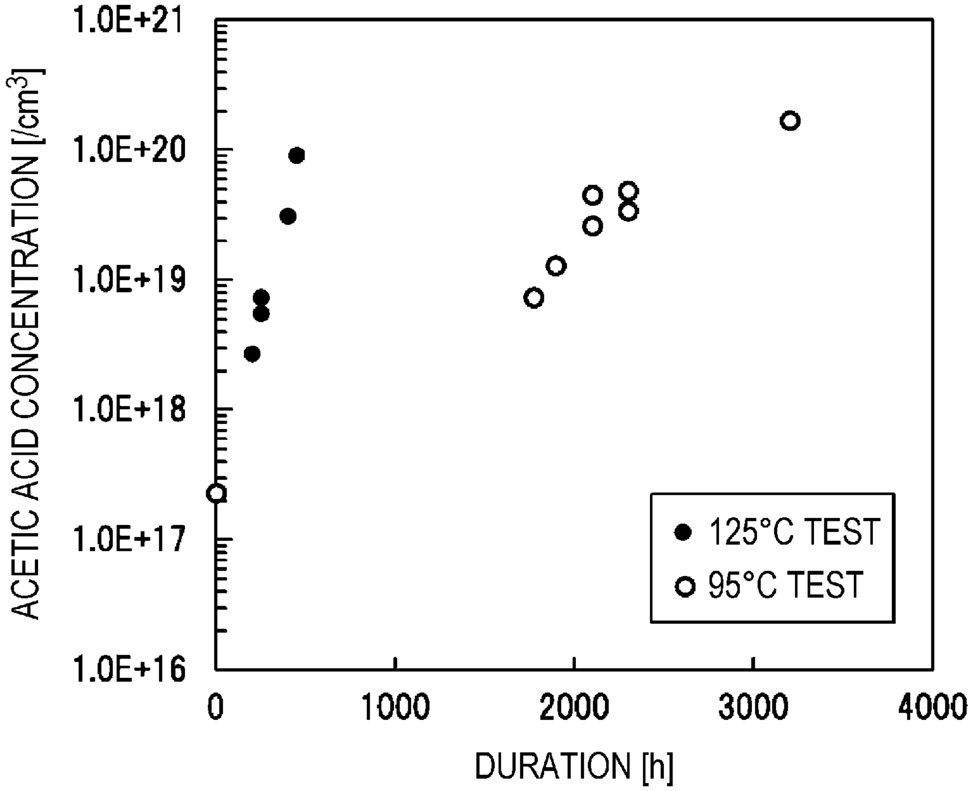
1.0E+21
1.0E+20
1.0E+19
1.0E+18
1.0E+17
1.0E+16
ACETIC ACID CONCENTRATION [/cm3]
0
1000
2000
3000
4000
DURATION [h]
125°C TEST
95°C TEST

FIG. 11

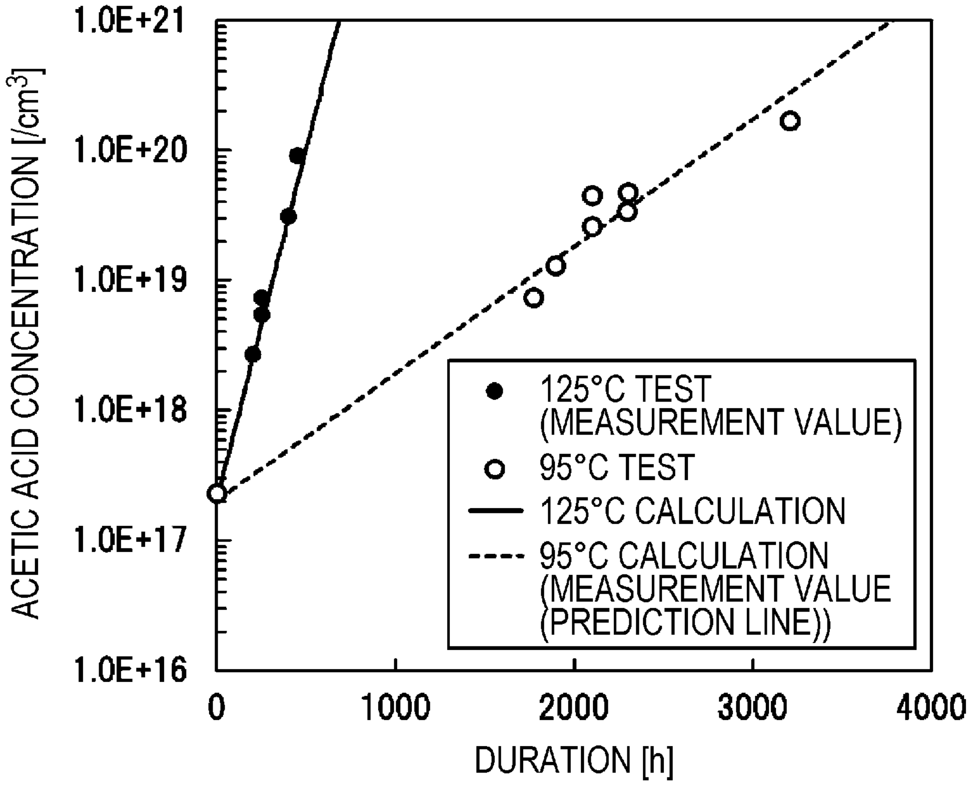
1.0E+21
1.0E+20
1.0E+19
1.0E+18
1.0E+17
1.0E+16
ACETIC ACID CONCENTRATION [/cm3]
0
1000
2000
3000
4000
DURATION [h]
125°C TEST
(MEASUREMENT VALUE)
95°C TEST
125°C CALCULATION
95°C CALCULATION
(MEASUREMENT VALUE
(PREDICTION LINE))

FIG. 12

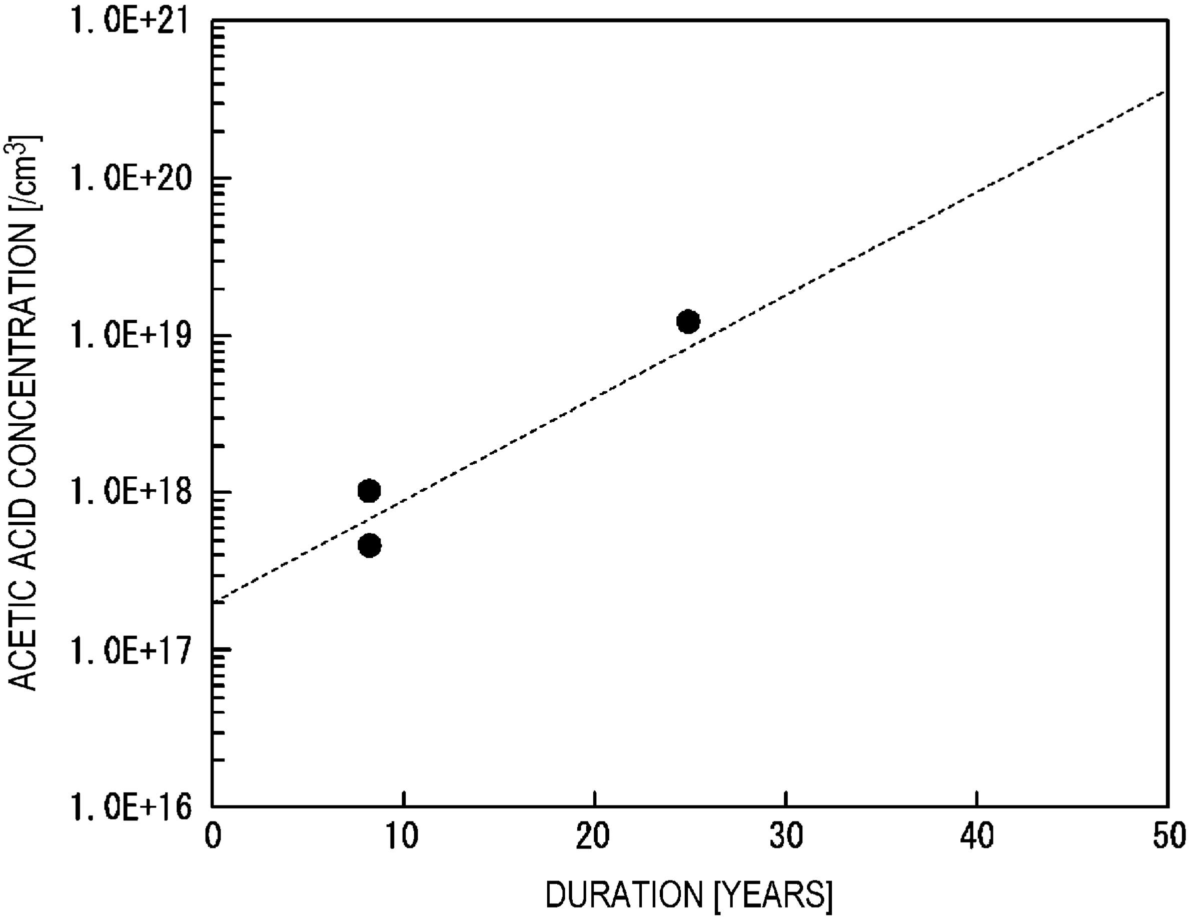
1.0E+21
1.0E+20
1.0E+19
1.0E+18
1.0E+17
1.0E+16
ACETIC ACID CONCENTRATION [/cm3]
0
10
20
30
40
50
DURATION [YEARS]

FIG. 13

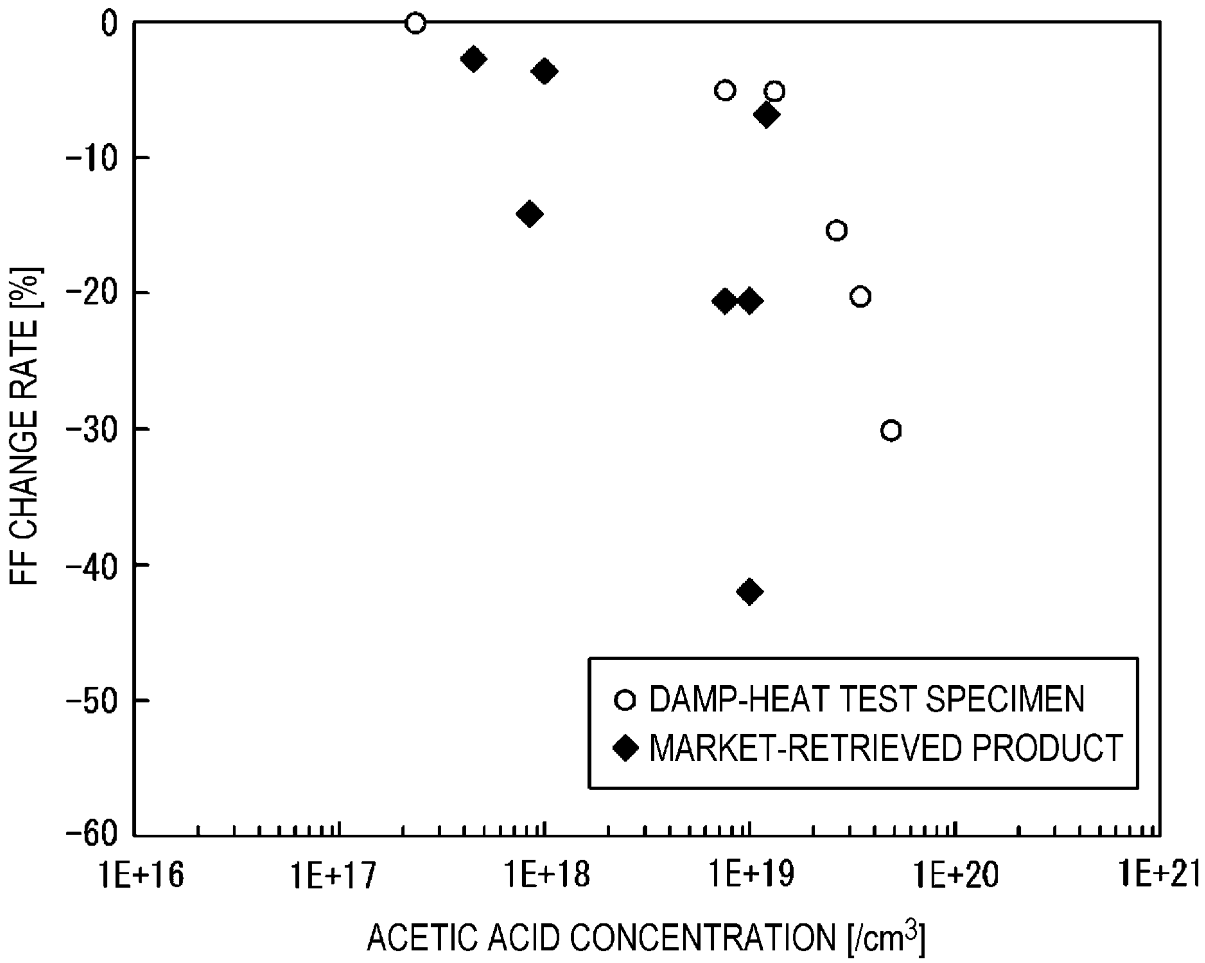
0
-10
-20
-30
-40
-50
-60
FF CHANGE RATE [%]
1E+16
1E+17
1E+18
1E+19
1E+20
1E+21
ACETIC ACID CONCENTRATION [/cm3]
DAMP-HEAT TEST SPECIMEN
MARKET-RETRIEVED PRODUCT

FIG. 14

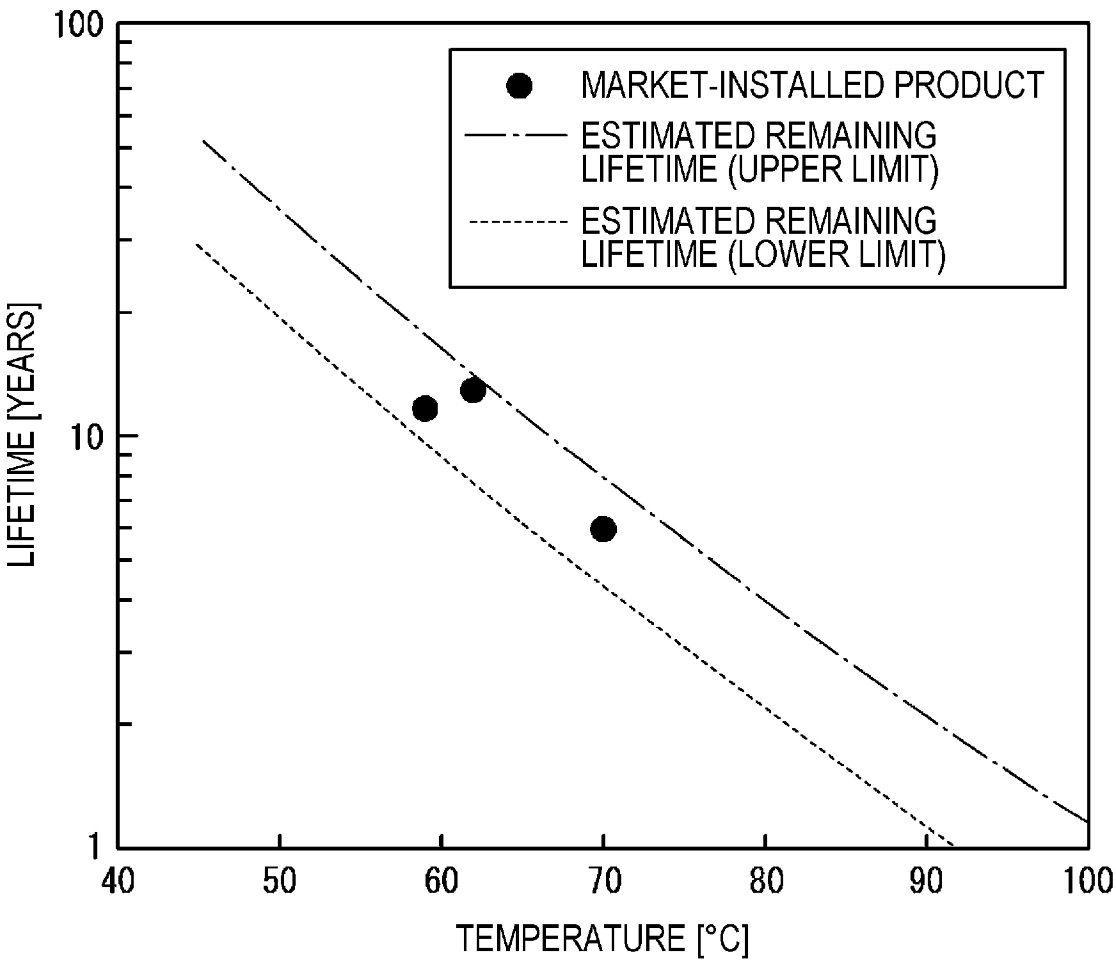
100
10
1
40
50
60
70
80
90
100
LIFETIME [YEARS]
TEMPERATURE [°C]
MARKET-INSTALLED PRODUCT
ESTIMATED REMAINING LIFETIME (UPPER LIMIT)
ESTIMATED REMAINING LIFETIME (LOWER LIMIT)

FIG. 15

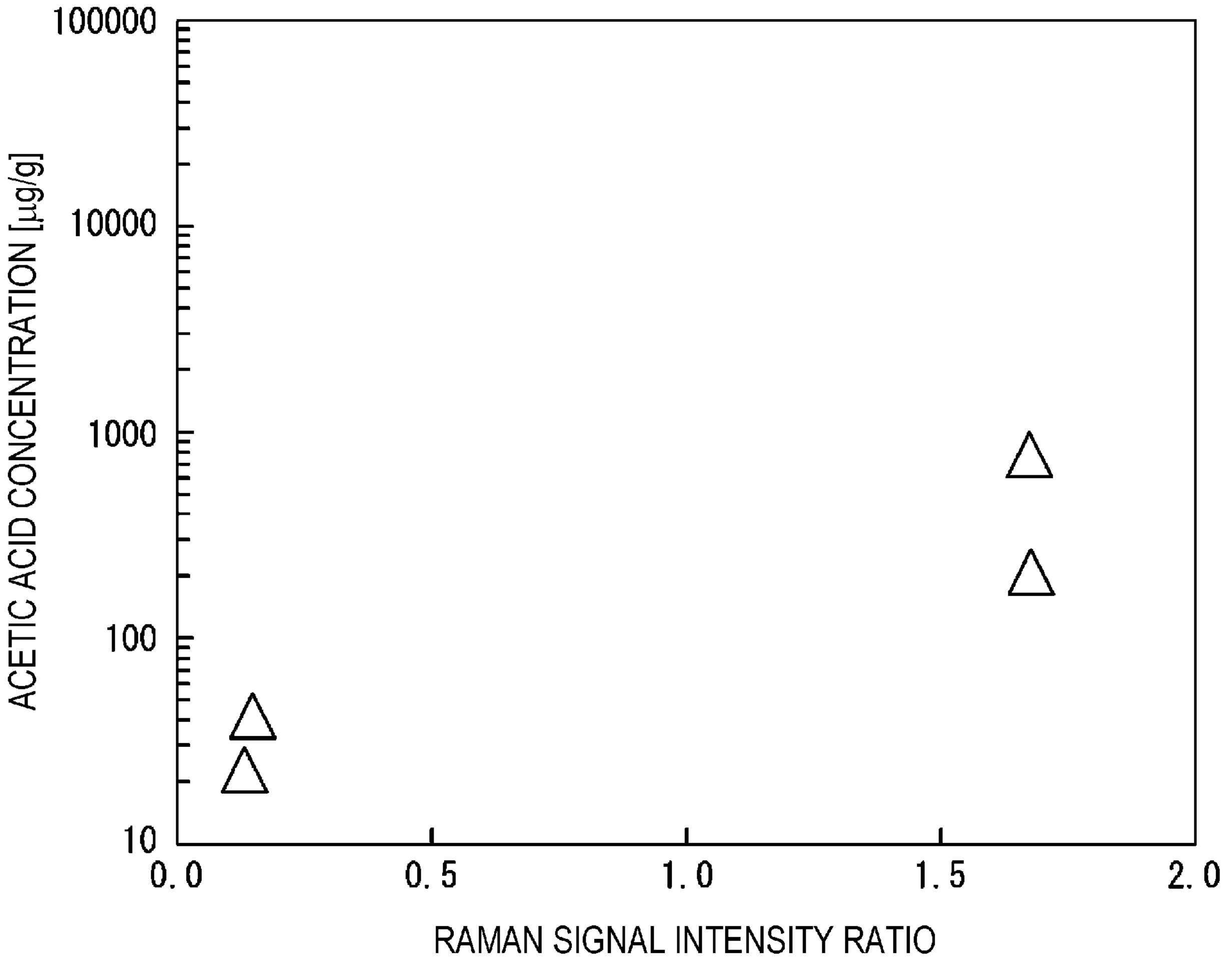
100000
10000
1000
100
10
ACETIC ACID CONCENTRATION [μg/g]
0.0
0.5
1.0
1.5
2.0
RAMAN SIGNAL INTENSITY RATIO

FIG. 16

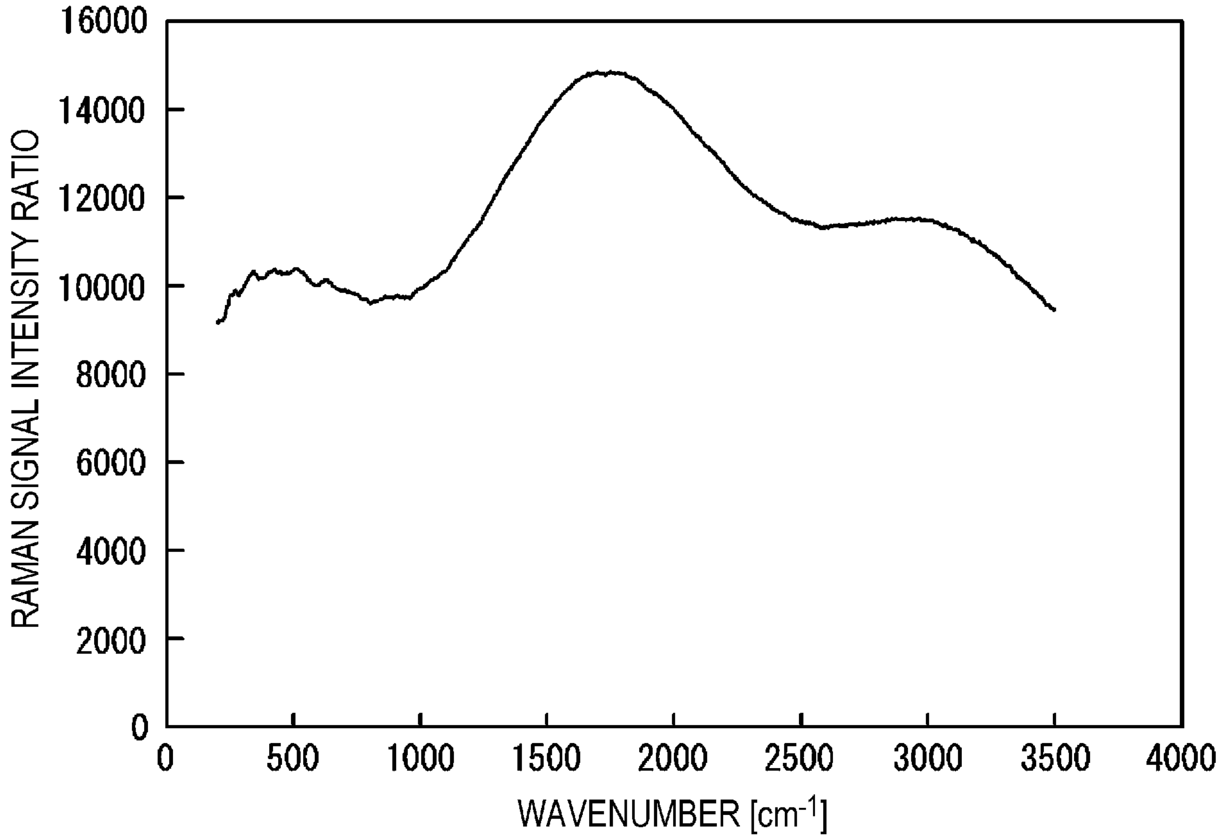
16000
14000
12000
10000
8000
6000
4000
2000
0
RAMAN SIGNAL INTENSITY RATIO
0
500
1000
1500
2000
2500
3000
3500
4000
WAVENUMBER [cm-1]

## INTERNATIONAL SEARCH REPORT

International application No.
**PCT/JP2024/025655**

**A. CLASSIFICATION OF SUBJECT MATTER**

***H02S 50/10***(2014.01)i; ***G01N 17/00***(2006.01)i; ***G01N 21/65***(2006.01)i; ***H02S 50/15***(2014.01)i
FI: H02S50/10; H02S50/15; G01N21/65; G01N17/00

According to International Patent Classification (IPC) or to both national classification and IPC

**B. FIELDS SEARCHED**

Minimum documentation searched (classification system followed by classification symbols)

H02S50/00-50/15

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-002989 A (KYOCERA CORPORATION) 07 January 2021 (2021-01-07)<br>claims 1, 12-13, paragraphs [0041]-[0044], [0066]-[0067] | 1, 5-13 |
| Y | HAGIHARA, Hideaki et al. Degradation of encapsulants for photovoltaic modules made of ethylene vinyl acetate studied by poitron annihilation lifetime spectroscopy. Japanese Journal of Applied Physics. 14 September 2016, vol. 55, pp. 102302-1 to 102302-5<br>"2. Experimental methods", fig. 1-3 | 1, 5-13 |
| A | CN 114384054 A (HANGZHOU JIHENGNI SCIENCE AND TECHNOLOGY CO.) 22 April 2022 (2022-04-22)<br>entire text, all drawings | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/025655**

| Patent document cited in search report | Publication date (day/month/year) | Patent family member(s) | Publication date (day/month/year) |
|---|---|---|---|
| JP 2021-002989 A | 07 January 2021 | US 2022/0190782 A1<br>claims 1, 17-18, paragraphs [0093]-[0096], [0118]-[0120]<br>CN 113544969 A | |
| CN 114384054 A | 22 April 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023124710 A
- JP 2007165438 A
- JP 2014082309 A
- JP 2017055657 A
- JP 2019146338 A


### Non-patent literature cited in the description


- **SARAH KURTZ et al.** Evaluation of High-Temperature Exposure of Rack-Mounted Photovoltaic Modules. *Conference Paper NREL/CP-520-45986*, June 2009
- **JIANG ZHU et al.** Changes of solar cell parameters during damp-heat exposure. *Prog. Photovolt: Res. Appl.*, 2016, vol. 24, 1346-1358
- **ATSUSHI MASUDA et al.** Degradation by acetic acid for crystalline Si photovoltaic modules. *Jpn. J. Appl. Phys.*, 2015, vol. 54, 04DR04